(19) Europäisches Patentamt
European Patent Office
Office européen des brevets

(11) **EP 3 049 494 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **14766701.8**

(22) Anmeldetag: **15.09.2014**

(51) Int Cl.:
***C09J 4/00*** (2006.01) ***C08F 2/38*** (2006.01)
***C08F 220/08*** (2006.01) ***C08F 220/18*** (2006.01)

(86) Internationale Anmeldenummer:
**PCT/EP2014/069626**

(87) Internationale Veröffentlichungsnummer:
**WO 2015/043998 (02.04.2015 Gazette 2015/13)**

(54) **HAFTKLEBEMASSE FÜR NIEDERENERGETISCHE ODER RAUE OBERFLÄCHEN**
PRESSURE SENSITIVE ADHESIVES FOR LOW ENERGY OR ROUGH SURFACES
ADHÉSIF SENSIBLE À LA PRESSION POUR À FAIBLE ÉNERGIE OU POUR SURFACES LISSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2013 DE 102013219495**

(43) Veröffentlichungstag der Anmeldung:
**03.08.2016 Patentblatt 2016/31**

(73) Patentinhaber: **tesa SE**
**22848 Norderstedt (DE)**

(72) Erfinder:
- **ELLRINGMANN, Kai**
  **22589 Hamburg (DE)**
- **HUSEMANN, Marc**
  **22559 Hamburg (DE)**

(56) Entgegenhaltungen:
**EP-A1- 1 318 181** **EP-A2- 1 308 493**
**WO-A1-2013/059549** **WO-A1-2014/001096**
**DE-A1-102005 043 999** **US-A1- 2007 087 192**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 049 494 B1

Printed by Jouve, 75001 PARIS (FR)

## Beschreibung

Die Erfindung betrifft eine Haftklebemasse, ein Klebeband, das eine solche Haftklebemasse umfasst, sowie deren Herstellungsverfahren, die Verwendung der Haftklebemasse und die Verwendung von Monomeren.

Die industrielle Nachfrage nach Haftklebern mit deutlich verbesserter Haftung auf Substraten mit niedriger Oberflächenenergie (engl.: low-surface energy, LSE) ist in letzter Zeit stark gestiegen. Untergründe, die als niederenergetisch gelten, weisen im Allgemeinen eine Oberflächenenergie von weniger als 40 dyn/cm$^2$, typischerweise weniger als 35 dyn/cm$^2$ auf. Als besonders kritisch gelten Materialien, die neben einer niedrigen Oberflächenenergie zusätzlich raue Oberflächen und darüber hinaus geringe Shore A Härten von weniger als 50, typischerweise weniger als 40 besitzen. Aufgrund der sich stetig verbessernden Eigenschaften und der relativ geringen Kosten finden solche Materialien in immer stärkerem Maße Verwendung in industriellen Applikationen, wodurch auch der Bedarf an geeigneten Haftklebern wächst.

Es wäre wünschenswert, wenn solche Haftkleber zugleich gute Eigenschaften hinsichtlich Adhäsion bzw. Schäladhäsion, Anfassklebrigkeit (Tack) und Kohäsion aufweisen. Diese Parameter konnten jedoch bislang nicht unabhängig voneinander eingestellt werden.

Zum Beispiel können Blockcopolymerklebstoffe im Allgemeinen so mit Klebrigmachern eingestellt werden, dass hohe Schälwiderstände auf LSE-Untergründen erzielt werden. Allerdings zeigen Blockcopolymerklebstoffe generell eine schlechte Temperaturbeständigkeit, da bei hohen Temperaturen die harten Domänen erweichen.

Acrylathaftklebstoffe können im Allgemeinen so eingestellt werden, dass ein hoher statischer Scherwiderstand bei erhöhten Temperaturen erzielt wird. Sie besitzen im Allgemeinen allerdings eine niedrige Schäladhäsion an LSE-Oberflächen. Klebriggemachte, auf Acrylat basierende Klebstoffe, wie jene, die im U.S.-Patent 5,602,221 (Bennett et al.) dargestellt sind, zeigen verbesserte Adhäsion an LSE-Untergründen. Der Anteil der Harze ist jedoch begrenzt, da durch die unpolaren Acrylatcomonomere, die Glasübergangstemperatur $T_G$ der gesamten Klebemassenformulierung angehoben wird. Durch Zusatz von klebrigmachenden Harzen steigt die Glasübergangstemperatur weiter an, sodass die Anfassklebrigkeit verloren geht und das Auffließen des Klebstoffs verschlechtert wird. EP 1318181 A1 offenbart druckempfindliche Klebstoffzusammensetzungen, die Acrylmonomere mit einer verzweigten Struktur umfassen.

Eine Aufgabe der Erfindung ist es daher, eine Haftklebemasse mit verbesserten Eigenschaften bereitzustellen. Weitere Aufgaben sind es, ein Herstellungsverfahren für eine solche Haftklebemasse, eine Klebeband umfassend die Haftklebemasse, ein Herstellungsverfahren für das Klebeband sowie eine Verwendung der Haftklebemasse und die Verwendung von Monomeren anzugeben.

Zumindest eine dieser Aufgaben wird durch den Gegenstand der unabhängigen Patentansprüche gelöst. Unteransprüche geben vorteilhafte Ausgestaltungen an.

Es wird eine Haftklebemasse angegeben. Nach zumindest einer Ausführungsform umfasst die Haftklebemasse

- ein zumindest teilweise vernetztes Polyacrylat auf Basis eines Monomerengemischs, wobei das Monomerengemisch

  a) 5 bis 100 Gew-% Acrylsäureester der Formel $CR^3_2 = C(R^2)(COOR^1)$ als Monomere A, wobei $R^1$ eine verzweigte Alkylgruppe mit 16 bis 22 C-Atomen ist, die mindestens zwei Verzweigungsstellen aufweist, $R^2$ aus H, Methyl oder Halogen ausgewählt ist, und $R^3$ jeweils unabhängig voneinander aus H oder Halogen ausgewählt ist,
  b) 0 bis 20 Gew-% Acrylsäure der Formel $CR^5_2 = C(R^4)(COOH)$ als Monomere B, wobei $R^4$ aus H, Methyl oder Halogen ausgewählt ist, und $R^5$ jeweils unabhängig voneinander aus H oder Halogen ausgewählt ist,
  c) 0 bis 30 Gew-% olefinisch ungesättigter Monomere mit mindestens einer funktionellen Gruppe als Monomere C, wobei die Monomere C nicht unter die Monomere A, B und D fallen, und
  d) 0 bis 95 Gew-% Acrylsäureester der Formel $CR^8_2 = C(R^7)(COOR^6)$ als Monomere D, wobei $R^6$ eine lineare, einfach verzweigte, cyclische oder polycyclische Alkylgruppe mit 1 bis 14 C-Atomen ist, $R^7$ aus H, Methyl oder Halogen ausgewählt ist, und $R^8$ jeweils unabhängig voneinander aus H oder Halogen ausgewählt ist,
  umfasst; sowie

- zumindest ein klebrigmachendes Harz, das in einem Anteil von 20 bis 60 Gewichtsteilen bezogen auf 100 Gewichtsteile Polyacrylat vorliegt.

Die Monomere A, B, C, D und das klebrigmachende Harz können jeweils unabhängig voneinander ein Gemisch von Verbindungen oder auch eine reine Verbindung sein. "Gew-%" steht für Gewichtsprozent. Halogene können aus F, Cl, Br, I und Kombinationen hiervon, insbesondere aus F und Cl und Kombinationen hiervon, ausgewählt sein. Die Haftklebemasse kann auch aus dem Polyacrylat und dem zumindest einem klebrigmachenden Harz bestehen. Das zumindest teilweise vernetzte Polyacrylat umfasst Polymerstränge, die durch Polymerisation des Monomerengemischs hervorgegangen sind und anschließend miteinander zumindest teilweise vernetzt wurden.

Die erfindungsgemäße Haftklebemasse weist insbesondere eine Kombination aus hoher Schäladhäsion und

Anfassklebrigkeit bei Raumtemperatur auf und zeigt auch sehr gute kohäsive Eigenschaften, sodass mit der Haftklebemasse insbesondere die oben genannten Nachteile herkömmlicher Klebstoffe überwunden werden. Die Haftklebemasse eignet sich sehr gut zum Verkleben von unpolaren und/oder porösen Untergründen.

Unpolare Untergründe haben eine Oberflächenenergie von weniger als 40 dyn/$cm^2$, typischerweise weniger als 35 dyn/$cm^2$ oder sogar weniger als 30 dyn/$cm^2$. Zu Materialien, die sich durch LSE-Oberflächen auszeichnen und die sehr gut mit der erfindungsgemäßen Haftklebemasse verklebt werden können, gehören beispielsweise UV-härtende Lacke, Pulverbeschichtungen, sowie Polyolefine wie Polypropylen (PP), Hochdruck-Polyethylen (LDPE), Niederdruck-Polyethylen (HDPE), ultrahochmolekulares Polyethylen (UHMWPE) und Polymere aus Ethylen-Propylen-Dien-Monomer (EPDM). Ebenso eignet sich die Haftklebemasse zum Verkleben von Materialien, die - ggf. neben einer niedrigen Oberflächenenergie - raue Oberflächen und darüber hinaus geringe Shore A Härten von weniger als 50, typischerweise weniger als 40, besitzen. Beispiele für solche Materialien sind offenzellige Schäume aus PE, EPDM, Polyester oder Polyurethan. Neben unpolaren Oberflächen können auch weniger anspruchsvolle polare Oberflächen gut mit der Haftklebemasse verklebt werden.

Die Oberflächenspannung lässt sich nach DIN ISO 8296 bestimmen. Hierfür lassen sich zum Beispiel Testtinten der Fa. Softal einsetzen. Die Tinten sind im Bereich von 30 bis 72 mN/m erhältlich. Die Tinte wird mit einem Tintenstrich auf die Oberfläche aufgetragen. Zieht sich der Tintenstrich in weniger als 2 Sekunden zusammen, wird die Messung mit einer Tinte mit niedrigerer Oberflächenspannung wiederholt. Bleibt der Tintenanstrich länger als 2 Sekunden unverändert, wird die Messung mit einer Tinte mit höherer Oberflächenspannung wiederholt, bis die 2 Sekunden erreicht sind. Der auf der Flasche angegebene Wert entspricht dann dem der Oberflächenenergie des Films.

Die Messung der Shore A Härte ist in den Prüfnormen DIN 53505, ISO 868, ISO 7619 sowie ASTM D 2240 beschrieben, wobei die Shore Härten auf einer Skala von 0 bis 100 angegeben sind. Bei der Prüfung wird die Eindringtiefe eines federbelasteten Stiftes in das Material gemessen. Eine geringe Eindringtiefe korreliert mit einem hohen Shore-Wert, eine große Eindringtiefe mit einer niedrigen Shore Härte. Für Shore A Messungen besteht der Eindringkörper aus einem Kegelstumpf mit einem Durchmesser von 0,79 mm und einem Öffnungswinkel von 35°. Für thermoplastische Elastomere wurde die DIN 7619-1 eingeführt.

Die Erfinder haben überraschend gefunden, dass insbesondere durch den Einsatz der Monomere A die vorteilhaften Eigenschaften der Haftklebemasse ermöglicht werden.

Aufgrund der stark verzweigten, langen Alkylkette $R^1$ der Monomere A sind diese Monomere sehr unpolar. Aufgrund der Monomere A kann auch das Polyacrylat selbst einen sehr unpolaren Charakter aufweisen, da beispielsweise das vergleichsweise polare Acrylatgerüst des Polyacrylats nach außen hin abgeschirmt werden kann. Hierdurch werden Dipol-Dipol-Wechselwirkungen mit einem zu verklebenden Untergrund weitgehend unterbunden. Die unpolaren Alkylgruppen $R^1$ der Monomere A sorgen auch für eine verbesserte Wechselwirkung mit unpolaren Untergründen, sodass die Anhaftung verstärkt und die Benetzung der Untergründe mit der Haftklebemasse verbessert wird. Des Weiteren ermöglichen sie eine gute Durchmischbarkeit des Polyacrylats mit den klebrigmachenden Harzen. Dies stärkt den Zusammenhalt in der Haftklebemasse, sodass diese auch vergleichsweise große Mengen an klebrigmachenden Harzen enthalten kann. Die Verteilung des klebrigmachenden Harzes in der Haftklebemasse kann insbesondere homogen sein.

Eine weitere Eigenschaft des Polyacrylats, die mit den stark verzweigten Alkylgruppen $R^1$ der Monomere A einhergeht, ist eine niedrige Glasübergangstemperatur $T_G$. Aufgrund des hohen Verzweigungsgrades neigen die vernetzten Monomere nicht zur Seitenkettenkristallisation. So weist ein Homopolymer der Monomere A eine statische Glasübergangstemperatur $T_G$ von weniger als 0°C, insbesondere weniger als -20°C, auf. Nach einigen Ausführungsformen kann die statische Glasübergangstemperatur eines solchen Homopolymers auch weniger als -40°C, mitunter sogar weniger als -60°C, betragen. Der $T_G$-Wert bestimmt sich nach DIN 53765:1994-03. Durch den Anteil der Monomere A kann also die Glasübergangstemperatur des Polyacrylats gesenkt bzw. eine niedrige Glasübergangstemperatur erhalten werden. Hierin liegt ein wesentlicher Unterschied zu herkömmlich verwendeten Alkylacrylsaüreestern mit langen, weitgehend oder ganz unverzweigten Alkylgruppen, beispielsweise Stearylacrylat, die zur Seitenkettenkristallisation neigen und somit zu einer Erhöhung der Glasübergangstemperatur führen bzw. aufgeschmolzen werden müssen.

Im Allgemeinen führen nämlich auch klebrigmachende Harze zu einem Anstieg der Glasübergangstemperatur. Um gute Anfassklebrigkeit und Auffließeigenschaften zu erhalten, darf die Glasübergangstemperatur eines Klebstoffes jedoch nicht zu hoch, am besten unterhalb von 25°C, sein. Somit weisen herkömmliche Klebstoffe in der Regel entweder schlechte Anfassklebrigkeit und Auffließeigenschaften bei einem hohen Gehalt an klebrigmachenden Harz auf oder sie enthalten nur geringe Mengen an klebrigmachenden Harzen und zeigen dann eine geringe Adhäsion. Die Erfinder fanden nunmehr heraus, dass durch einen, insbesondere hohen, Anteil der Monomere A im Polyacrylat auch vergleichsweise große Mengen an klebrigmachenden Harzen in der Klebemasse enthalten sein können, ohne dass die Anfassklebrigkeit verloren geht oder die Auffließeigenschaften nachteilig verändert werden. Mit Vorteil weisen die erfindungsgemäßen Haftklebemassen in der Regel eine Glasübergangtemperatur von < 25°C, insbesondere < 15°C, auf. Sie zeigen dennoch aufgrund des hohen Gehalts an klebrigmachenden Harzen eine gute Adhäsion an unpolaren Oberflächen. Der tan $\delta$ (bestimmt nach Testmethode B) liegt für erfindungsgemäße Haftklebemassen zwischen 0,2 und 1,0, insbesondere zwischen 0,3 und 0,8 und vorzugsweise zwischen 0,4 bis 0,7, was mit guten Auffließeigenschaften einhergeht.

Des Weiteren hat sich überraschend gezeigt, dass die Monomere A, insbesondere bei einer radikalischen Vernetzung, zu einer sehr guten Vernetzungseffizienz führen können. Die Erfinder gehen davon aus, dass sich an den Verzweigungsstellen leicht tertiäre, also recht stabile Radikale bilden können. Diese können untereinander vernetzt werden, sodass eine Vernetzung auch über die Seitenketten der Monomere A erfolgen kann. Hieraus ergeben sich sehr gute Kohäsionseigenschaften für die Haftklebemasse. Sie weist aufgrund der guten Vernetzung in der Regel eine hohe Temperaturbeständigkeit und Alterungsbeständigkeit auf. Eine erfindungsgemäße Haftklebemasse kann beispielsweise ohne weiteres für 15 min auf 200°C erhitzt werden. Sie kann in der Regel aufgrund der guten Vernetzung auch gut gestanzt werden, was industrielle Anwendungen erleichtert.

Darüber hinaus zeigen die erfindungsgemäßen Haftklebemassen wegen der oben beschriebenen vorteilhaften Vernetzung auch eine gute Stabilität gegenüber Weichmachern. Somit eignet sich die Haftklebemasse auch zum Verkleben von Untergründen, die einen hohen Gehalt an Weichmachern enthalten.

Das Polyacrylat kann vollständig aus Monomeren A aufgebaut sein oder auch anteilig auf weiteren Monomeren, insbesondere den Monomeren B, C oder D in beliebigen Kombinationen, basieren. Das Polyacrylat kann ein mittleres Molekulargewicht von 50000 bis 4000000 g/mol, insbesondere 100000 bis 3000000 g/mol und vorzugsweise 400000 bis 1400000 g/mol, aufweisen. Die Bestimmung des mittleren Molekulargewichtes erfolgt über Gelpermeationschromatographie (GPC) (Testmethode A).

Wie bereits beschrieben, ist der hohe Verzweigungsgrad der Alkylgruppen $R^1$ wichtig für die Eigenschaften der Haftklebemasse. Die Alkylgruppen $R^1$ weisen eine Hauptkette auf, an der an den Verzweigungsstellen Seitenketten angebunden sind. Die Verzweigungsstellen entsprechen also tertiären und quartären, insbesondere jedoch tertiären, Kohlenstoffatomen in der Alkylgruppe $R^1$. Die Verzweigungsstellen wie auch der Gehalt an Monomeren A in der Haftklebemasse kann beispielsweise mittels $^{13}C$-NMR-Spektroskopie bestimmt bzw. nachgewiesen werden.

Gemäß einer weiteren Ausführungsform weist mindestens die Hälfte der Monomere A eine Alkylgruppe $R^1$ mit drei oder mehr Verzweigungsstellen auf. Es können mindestens 75%, insbesondere mindestens 90%, oder auch sämtliche Monomere A eine Alkylgruppe $R^1$ mit drei oder mehr Verzweigungsstellen aufweisen. In der Regel weisen die Monomere A 3 oder 4, insbesondere 3, Verzweigungsstellen auf. Ein höherer Gehalt an Verzweigungsstellen führt zu einer geringeren Kristallisationsneigung und einer niedrigeren Glasübergangstemperatur, wodurch die oben beschriebenen Vorteile in verbesserter Form ermöglicht werden. Es wird auch die Vernetzung weiter verbessert. Gemäß einer weiteren Ausführungsform ist bei den Monomeren A $R^2$ aus H oder Methyl ausgewählt und $R^3$ = H. Es handelt sich bei den Monomeren A dann um Alkylester der Acrylsäure bzw. Methacrylsäure. Diese sind in der Regel günstiger in der Herstellung als die halogenierten Derivate.

Bei den Alkylgruppen $R^1$ der Monomere A handelt es sich vorzugsweise um reine Kohlenwasserstoffreste.

Wie bereits oben beschrieben, weisen die Alkylgruppen $R^1$ der Monomere A eine Hauptkette auf, an der an den Verzweigungsstellen Seitenketten angebunden sind. Gemäß einer weiteren Ausführungsform weisen mindestens 75%, insbesondere mindestens 90%, oder sämtliche dieser Seitenketten 2 bis 4 C-Atome auf. Seitenketten dieser Größe sind von Vorteil, da sie zu weniger steifen Alkylresten als beispielsweise Methylgruppen führen. Sie sorgen für eine sehr geringe Kristallisationsneigung und gute Abschirmung des polaren Gerüstes im Polyacrylat.

Gemäß einer weiteren Ausführungsform sind in den Alkylgruppen $R^1$ der Monomere A die Verzweigungsstellen durch Kohlenwasserstoffketten mit 2 bis 5, insbesondere 3 bis 4, C-Atomen beabstandet. Die Alkylgruppen $R^1$ der Monomere A haben bevorzugt einen an Dendrimere erinnernden Aufbau.

In einer weiteren vorteilhaften Ausgestaltung sind die Alkylgruppen $R^1$ der Monomere A aus dreifach verzweigten C17-Alkylgruppen gewählt.

Die Monomere A können beispielsweise durch Veresterung von Acrylsäure oder eines Acrylsäurederivates mit einem entsprechenden verzweigten Alkylalkohol, also $R^1$-OH, gebildet werden. Der zugrundeliegende Alkohol $R^1$-OH kann beispielsweise beim Steam-Cracking von Öl erhalten oder auch vollsynthetisch hergestellt werden. Eine Aufreinigung ist per Destillation oder mittels chromatographischer Verfahren möglich. Eine Beschreibung der zugrundeliegenden Alkohole erfolgt in WO2009/124979, deren Offenbarungsgehalt insofern hiermit durch Rückbezug aufgenommen wird. Eine Veresterung der Alkohole zum Acrylat ist in WO 2011/64190 beschrieben, deren Offenbarungsgehalt insofern hiermit durch Rückbezug aufgenommen wird.

Die Haftklebemasse enthält klebrigmachende Harze. Solche Harze sind bereits in der Literatur beschrieben worden und dem Fachmann an sich auch unter diesem Begriff bekannt. Es handelt sich um Polymere von einem oder mehreren verschiedenen Monomeren, wobei die Polymere ein vergleichsweise niedriges Molekulargewicht aufweisen und die Adhäsionseigenschaften eines Klebstoffes verbessern können. Es wird hinsichtlich der klebrigmachenden Harze und insbesondere wegen deren Darstellung auf das "Handbook of Pressure Sensitive Adhesive Technology" von Donatas Satas (van Nostrand, 1989) hingewiesen, dessen Offenbarungsgehalt insofern hiermit durch Rückbezug aufgenommen wird. Die Auswahl an klebrigmachenden Harzen ist grundsätzlich nicht beschränkt.

Gemäße einer weiteren Ausführungsform weist das klebrigmachende Harz ein mittleres Molekulargewicht von weniger als 4000 g/mol aufweist. In der Regel beträgt das mittlere Molekulargewicht mindestens 100 g/mol, zum Beispiel

500 bis 3000 g/mol und insbesondere 1000 bis 2000 g/mol. Die Bestimmung des Molekulargewichts erfolgt nach Testmethode A.

Gemäß einer weiteren Ausführungsform ist das klebrigmachende Harz aus einer Gruppe ausgewählt, die Pinen-, Inden- und Kolophoniumharze sowie deren disproportionierte, hydrierte, polymerisierte oder veresterte Derivate und Salze, aliphatische Kohlenwasserstoffharze, alkylaromatische Kohlenwasserstoffharze, aromatische Kohlenwasserstoffharze, Terpenharze, Terpenphenolharze, C5- und C9-Kohlenwasserstoffharze, die zumindest teilweise hydriert sein können, Naturharze und Kombinationen hiervon umfasst. Über die Auswahl bzw. die Kombination von klebrigmachenden Harzen können die Eigenschaften der Haftklebemasse fein eingestellt werden.

Generell weist das Polyacrylat eine hohe Kompatibilität mit den klebrigmachenden Harzen auf. Aufgrund seines unpolaren Charakters weist das Polyacrylat aber auch noch mit sehr unpolaren Harzen eine gute Kompatibilität auf, die bei herkömmlichen Polymeren nicht unbedingt so gegeben ist. Zur Einstufung der Polarität der klebrigmachenden Harze eignet sich zum Beispiel die Bestimmung des DACP (Diaceton Alkohol Cloud Point). Hier wird analog ASTM D6038 vorgegangen. Je höher der DACP Wert liegt, umso unpolarer sind die klebrigmachenden Harze und umso schlechter kompatibel werden sie mit relativ polaren Polyacrylaten. Gemäß einer weiteren Ausführungsform weist das klebrigmachende Harz einen DACP Wert von größer 0°C, insbesondere von größer 20°C und vorzugsweise von größer 40°C, auf.

Das klebrigmachende Harz kann bevorzugt aus C5- und/oder C9-Kohlenwasserstoffharzen, die zumindest teilweise hydriert sein können, ausgewählt werden. Diese zeigen eine besonders hohe Kompatibilität mit dem Monomer A des Polyacrylats. Durch einen höheren Grad der Hydrierung steigt der DACP Wert an.

Weiterhin wurde überraschend festgestellt, dass Polyacrylate mit einem vergleichsweise hohen Anteil an Monomeren A von beispielsweise größer 50 Gew-% auch - trotz der abschirmenden unpolaren Gruppen - eine hohe Kompatibilität mit polaren klebrigmachenden Harzen aufweisen. Polare klebrigmachende Harze sind beispielsweise Kolophoniumharze. Generell wurde eine hohe Kompatibilität auch mit polaren klebrigmachenden Harzen festgestellt, die einen DACP Wert von unterhalb -20°C aufweisen. Gemäß einer weiteren Ausführungsform weist das klebrigmachende Harze einen DACP Wert von weniger als -20°C auf.

Die Monomere D können in Ergänzung zum Monomer A zur Darstellung des Polyacrylats bzw. der Haftklebemasse eingesetzt werden. Die Alkylgruppe $R^6$ ist so gewählt, dass die Monomere D noch relativ unpolar sind und keine hohe Kristallisationsneigung zeigen. Die Monomere D lassen sich auch gut mit den Monomeren A mischen. Über die Wahl der Monomere D können die Eigenschaften der Haftklebemasse fein eingestellt werden. Sie können kostengünstiger als die Monomere A sein, sodass sich Kombinationen von den Monomeren A und D auch aus wirtschaftlichen Gründen anbieten. Zudem kann die Polarität des Polyacrylats eingestellt werden, um zum Beispiel eine Kompatibilität mit polaren Harzen weiter zu verbessern.

Gemäß einer weiteren Ausführungsform weist das Monomerengemisch einen Anteil von mindestens 5 Gew-% an Monomeren D auf.

Gemäß einer weiteren Ausführungsform ist bei den Monomeren D $R^7$ aus H und Methyl ausgewählt und $R^8$ = H.

Gemäß einer weiteren Ausführungsform ist bei den Monomeren D $R^6$ aus einer Gruppe ausgewählt, die Methyl, Ethyl, Propyl, Pentyl, Hexyl, Heptyl, Octyl, Nonyl, Decyl, Undecyl, Lauryl sowie deren verzweigte Isomere, Cycloalkylgruppen und polycyclische Alkylgruppen, wobei die Cycloalkylgruppen und polycyclischen Alkylgruppen mit Alkylgruppen, Halogenatomen oder Cyanogruppen substituiert sein können, und Kombinationen hiervon umfasst.

Beispiele für verzweigte Isomere für $R^6$ sind Isobutyl, 2-Ethylhexyl und Isooctyl. Beispiele für cyclische und polycyclische Alkylgruppen $R^6$ sind Cyclohexyl, Isobornyl, und 3,5-Dimethyladamantyl. Vorteilhafte Monomere D sind beispielsweise Isobutylacrylat, 2-Ethylhexylacrylat, 2-Ethylhexylmethacrylat, Isooctylacrylat, Isooctylmethacrylat, Cyclohexylmethacrylat, Isobornylacrylat, Isobornylmethacrylat und 3,5-Dimethyladamantylacrylat und Kombinationen hiervon.

Gemäß einer weiteren Ausführungsform enthält die Alkylgruppe $R^6$ der Monomere D 4 bis 9 C-Atome. Es kann eine entsprechende Auswahl an oben genannten Beispielen getroffen werden.

Wie oben bereits beschrieben, enthält das Polyacrylat einen Anteil an Monomeren A von 5 bis 100 Gew-% des zugrunde liegenden Monomerengemischs. Um einen ausgesprochen unpolaren Charakter und eine gute Vernetzung zu erhalten, bietet sich ein hoher Anteil an Monomeren A im Monomerengemisch, auf dem das Polyacrylat basiert, an. Gemäß einer weiteren Ausführungsform enthält das Monomerengemisch einen Anteil an Monomeren A von mindestens 45 Gew-%, insbesondere mindestens 60 Gew-% und vorzugsweise mindestens 70 Gew-%. Der Anteil an Monomeren A kann mindestens 80 Gew-% oder sogar mindestens 90 Gew-% betragen.

Gemäß einer weiteren Ausführungsform umfasst das Monomerengemisch 5 bis 45 Gew-%, insbesondere 10 bis 30 Gew-%, an Monomeren D. In einer solchen Ausführungsform wird in der Regel ein Anteil von mindestens 45 Gew-% an Monomeren A eingesetzt.

Vorteilhafte Polyacrylate mit einem ausgeprägten unpolaren Charakter können auch erhalten werden, indem das Monomerengemisch die Monomere A und D in entsprechenden Mengen enthält. Gemäß einer weiteren Ausführungsform umfasst das Monomerengemisch einen Anteil von mindestens 80 Gew-%, insbesondere mindestens 90 Gew-%, Monomere A oder von mindestens 80 Gew-%, insbesondere mindestens 90 Gew-%, an den Monomeren A und D

zusammen.

Insbesondere ein solch hoher Anteil an unpolaren Monomeren A bzw. A und D begünstigt den Einsatz großer Mengen an klebrigmachenden Harzen. Gemäß einer Weiterbildung dieser Ausführungsform liegt das klebrigmachende Harz in einem Anteil von mindestens 40 Gewichtsteilen, insbesondere mindestens 45 Gewichtsteilen, bezogen auf 100 Gewichtsteile Polyacrylat in der Haftklebemasse vor.

Die Monomere A führen zu einer niedrigeren Glasübergangstemperatur als dies für die Monomere D der Fall ist. Da klebrigmachende Harze wiederum die Glasübergangstemperatur erhöhen, ergeben sich weitere vorteilhafte Ausgestaltungen, wenn das Monomerengemisch mindestens 80 Gew-%, insbesondere mindestens 90 Gew-%, Monomer A enthält und das klebrigmachende Harz zu mindestens 40 Gewichtsteilen, insbesondere mindestens 45 Gewichtsteilen, bezogen auf 100 Gewichtsteile Polyacrylat in der Haftklebemasse vorliegt.

Insbesondere aus wirtschaftlichen Gründen können sich auch Ausführungsformen anbieten, die einen geringeren Anteil an Monomeren A im Monomerengemisch enthalten. Gemäß einer weiteren Ausführungsform enthält das Monomerengemisch einen Anteil an Monomeren A von bis zu 40 Gew-%, insbesondere bis zu 30 Gew-%. Es kann beispielsweise einen Anteil an Monomeren A von 5 bis 25 Gew-%, insbesondere 5 bis 15 Gew-%, enthalten. Das Monomerengemisch kann hierbei einen Anteil an Monomeren D von mindestens 40 Gew-%, insbesondere mindestens 50 Gew-% und vorzugsweise mindestens 60 Gew-%, enthalten. Es kann auch einen Anteil an Monomeren D von mindestens 75 Gew-% enthalten. Ggf. kann dann die Haftklebemasse einen Anteil an klebrigmachenden Harz von weniger als 45 Gewichtsteilen, insbesondere weniger als 40 Gewichtsteilen, bezogen auf 100 Gewichtsteile Polyacrylat enthalten.

Das Polyacrylat kann auf dem Monomer A alleine oder auch auf einer Kombination der Monomere A und D basieren. Je nach Vernetzungsmethode kann es vorteilhaft sein, wenn das Monomerengemisch auch Monomere B und/oder C umfasst. Gemäß einer weiteren Ausführungsform umfasst das Monomerengemisch einen Anteil von 0,01 bis 10 Gew-%, insbesondere 0,5 bis 5 Gew-%, Monomere B und/oder 0,01 bis 20 Gew-%, insbesondere 0,1 bis 10 Gew-% und bevorzugt 0,5 bis 5 Gew-%, Monomere C. Die Monomere B und C können auch zur Feinabstimmung der Eigenschaften der Haftklebemasse verwendet werden.

Die Monomere B können beispielsweise eine thermische Vernetzung erleichtern. Auf Monomere C kann hierfür verzichtet werden.

Gemäß einer weiteren Ausführungsform ist in den Monomeren B $R^4$ aus H und Methyl ausgewählt und $R^5$ = H. Diese Monomere sind kostengünstiger als die halogenierten Derivate.

Die Monomere C können beispielsweise für weitere Vernetzungsmethoden eingesetzt werden. Diese können auch Einfluss auf die Auswahl der funktionellen Gruppe des Monomers C haben. Die funktionellen Gruppen des Monomers C bestehen insbesondere nicht nur aus einem angebunden H-Atom oder einer angebundenen Alkylgruppe. Es können auch mehrere Monomere C, zum Beispiel aus den unten genannten Beispielen, in unterschiedlichen Kombinationen eingesetzt werden.

Es können Monomere C eingesetzt, die polare Gruppen wie beispielsweise Carboxylgruppen, Sulfon- und Phosphonsäuregruppen, Hydroxygruppen, Lactam und Lacton, N-substituiertes Amid, N-substituiertes Amin, Carbamat-, Epoxy-, Thiol-, Alkoxy- und Cyanogruppen sowie Ether tragen.

Es können moderat basische Monomere C eingesetzt werden. Nicht abschließende Beispiele hierfür sind N,N-Dialkylsubstituierte Amide, wie zum Beispiel N,N-Dimethylacrylamid, N,N-Dimethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Butoxymethyl)methacrylamid, N-Methylolacrylamid, N-(Ethoxymethyl)acrylamid, N-Isopropylacrylamid.

Weitere bevorzugte Beispiele für Monomere C sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glycidylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, $\beta$-Acryloyloxypropionsäure, Trichloracrylsäure, Fumarsäure, Crotonsäure, Aconitsäure, Dimethylacrylsäure, wobei diese Aufzählung nicht abschließend ist.

Weitere bevorzugte Beispiele für Monomere C sind Vinylester, Vinylether, Vinylhalogenide, Vinylidenhalogenide, Vinylverbindungen mit aromatischen Cyclen und Heterocyclen in $\alpha$-Stellung eingesetzt. Auch hier sind nicht abschließende Beispiele genannt: Vinylacetat, Vinylformamid, Vinylpyridin, Ethylvinylether, Vinylchlorid, Vinylidenchlorid und Acrylonitril.

Weitere bevorzugte Beispiele für Monomere C sind Photoinitiatoren mit einer copolymerisierbaren Doppelbindung. Als Photoinitiatoren sind Norrish-I- und -II-Photoinitiatoren geeignet. Beispiele hierfür sind Benzoinacrylat und ein acryliertes Benzophenon, zum Beispiel der Fa. UCB (Ebecryl P 36®). Im Prinzip können alle dem Fachmann bekannten Photoinitiatoren eingesetzt werden, die das Polymer über einen Radikalmechanismus unter UV-Bestrahlung vernetzen können. Ein Überblick über mögliche einsetzbare Photoinitiatoren, die mit einer Doppelbindung funktionalisiert werden können, wird in Fouassier: "Photoinititation, Photopolymerization and Photocuring: Fundamentals and Applications",

Hanser-Verlag, München 1995, gegeben, deren Offenbarungsgehalt insofern per Rückbezug aufgenommen wird. Ergänzend wird auf Carroy et al. in "Chemistry and Technology of UV and EB Formulation for Coatings, Inks and Paints", Oldring (Hrsg.), 1994, SITA, London hingewiesen, dessen Offenbarungsgehalt insofern per Rückbezug aufgenommen wird.

Weiterhin können als Monomere C auch Verbindungen zugesetzt werden, die eine hohe statische Glasübergangstemperatur besitzen. Als Komponenten eigenen sich aromatische Vinylverbindungen, wie zum Beispiel Styrol, wobei bevorzugt die aromatischen Kerne aus $C_4$- bis $C_{18}$-Bausteinen bestehen und auch Heteroatome enthalten können. Bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Die Glasübergangstemperatur einer Haftklebemasse hängt, wie oben beschrieben, unmittelbar mit dessen Adhäsionseigenschaften und dessen Anfassklebrigkeit zusammen. Grundsätzlich können zur Erzielung einer bevorzugten Glasübergangstemperatur $T_G$ von $T_G$ < 25 °C, entsprechend dem vorstehend gesagten, die Monomere derart ausgesucht und die mengenmäßige Zusammensetzung des Monomerengemischs derart ausgewählt sein, dass sich nach der Fox-Gleichung (G1) (vgl. T.G. Fox, Bull. Am. Phys. Soc. 1 (1956) 123) der gewünschte $T_G$-Wert ergibt.

$$\frac{1}{T_G} = \sum_n \frac{w_n}{T_{G,n}} \qquad (G1)$$

Hierin repräsentiert n die Laufzahl über die eingesetzten Monomere, $W_n$ den Massenanteil des jeweiligen Monomers n (Gew-%) und $T_{G,n}$ die jeweilige Glasübergangstemperatur des Homopolymers aus den jeweiligen Monomeren n in K.

Gemäß einer weiteren Ausführungsform enthält das Monomerengemisch einen Anteil von bis zu 20 Gew-%, insbesondere bis zu 15 Gew-% und vorzugsweise bis zu 10 Gew-%, an Alkylacrylsäure- oder Alkylmethacrylsäureestern mit linearen oder einfach verzweigten Alkylgruppen mit 16 bis 22 C-Atomen. Das Monomerengemisch kann beispielsweise 0,1 bis 5 Gew-% an diesen Monomeren enthalten. Solche Monomere steigern zwar grundsätzlich die Glasübergangstemperatur, dieser Effekt ist jedoch bei einem geringen Gehalt im Polyacrylat nicht so stark ausgeprägt. Solche Monomere können beispielsweise zur Feinabstimmung der Eigenschaften der Haftklebemasse verwendet werden. Beispiele für diese Monomere sind Stearylacrylat und Behenylacrylat. Es kann auch durch insbesondere hohe Anteile der Monomere A erreicht werden, dass die relativ langen Seitenketten von beispielsweise Stearylacrylat in der unpolaren Seitenkettenmatrix der Monomere A aufgenommen werden und so Seitenkettenkristallisationen unterbunden werden.

Gemäß einer weiteren Ausführungsform umfasst die Haftklebemasse Weichmacher, die in einem Anteil von bis zu 15 Gewichtsteilen bezogen auf 100 Gewichtsteile Polyacrylat in der Haftklebemasse vorliegen. Weichmacher können auch in 0,1 bis 10 Gewichtsteilen, insbesondere 0,5 bis 5 Gewichtsteilen, bezogen auf 100 Gewichtsteile Polyacrylat eingesetzt werden. Es können grundsätzlich alle dem Fachmann bekannten Weichmacher eingesetzt werden.

Gemäß einer weiteren Ausführungsform umfasst die Haftklebemasse Additive. Additive können in bis zu 40 Gewichtsteilen, insbesondere 1 bis 30 Gewichtsteilen, bezogen auf 100 Gewichtsteile Polyacrylat eingesetzt werden. Die Additive können beispielsweise aus einer Gruppe ausgewählt sein, die Füllstoffe, wie zum Beispiel Fasern, Ruß, Zinkoxid, Kreide, Wollastonit, Voll- oder Hohlglaskugeln, Mikrokugeln, Kieselsäure und Silikate, Keimbildner, elektrisch leitfähige Materialien, wie zum Beispiel konjugierte Polymere, dotierte konjugierte Polymere, Metallpigmente, Metallpartikel, Metallsalze und Graphit, Blähmittel, Compoundierungsmittel, Alterungsschutzmittel, zum Beispiel in Form von primären und sekundären Antioxidantien oder in Form von Lichtschutzmitteln, und Kombinationen hiervon umfasst.

Die Haftklebemasse kann auch aus Polyacrylat, klebrigmachenden Harzen und ggf. Weichmacher und ggf. Additiven bestehen.

Als weiterer Aspekt der Anmeldung wird ein Verfahren zur Herstellung einer Haftklebemasse angeben. Nach zumindest einer Ausführungsform umfasst das Verfahren die Schritte:

(A) Erzeugen eines Monomerengemischs, wobei das Monomerengemisch

a) 5 bis 100 Gew-% Acrylsäureester der Formel $CR^3_2 = C(R^2)(COOR^1)$ als Monomere A, wobei $R^1$ eine verzweigte Alkylgruppe mit 16 bis 22 C-Atomen ist, die mindestens zwei Verzweigungsstellen aufweist, $R^2$ aus H, Methyl oder Halogen ausgewählt ist, und $R^3$ jeweils unabhängig voneinander aus H oder Halogen ausgewählt ist,
b) 0 bis 20 Gew-% Acrylsäure der Formel $CR^5_2 = C(R^4)(COOH)$ als Monomere B, wobei $R^4$ aus H, Methyl oder Halogen ausgewählt ist, und $R^5$ jeweils unabhängig voneinander aus H oder Halogen ausgewählt ist,
c) 0 bis 30 Gew-% olefinisch ungesättigter Monomere mit mindestens einer funktionellen Gruppe als Monomere C, wobei die Monomere C nicht unter die Monomere A, B und D fallen, und

d) 0 bis 95 Gew-% Acrylsäureester der Formel $CR^8_2 = C(R^7)(COOR^6)$ als Monomere D, wobei $R^6$ eine lineare, einfach verzweigte, cyclische oder polycyclische Alkylgruppe mit 1 bis 14 C-Atomen ist, $R^7$ aus H, Methyl oder Halogen ausgewählt ist, und $R^8$ jeweils unabhängig voneinander aus H oder Halogen ausgewählt ist, umfasst;

(B) Polymerisieren des Monomerengemischs unter Ausbildung von Polyacrylat;

(C) Mischen des Polyacrylats mit zumindest einem klebrigmachenden Harz, das in einem Anteil von 20 bis 60 Gewichtsteilen bezogen auf 100 Gewichtsteile Polyacrylat eingesetzt wird; und

(D) zumindest teilweises Vernetzen einer nach dem Schritt (C) erhaltenen Mischung unter Ausbildung der Haftklebemasse.

Durch das Verfahren kann eine Haftklebemasse nach zumindest einer erfindungsgemäßen Ausführungsform hergestellt werden. Die oben gemachten Ausführungen haben daher auch für entsprechende Ausführungsformen des Verfahrens Geltung und dementsprechend können auch nachfolgende Angaben für eine erfindungsgemäße Haftklebemasse Geltung haben.

Die Schritte (A) bis (D) werden vorzugsweise in dieser Reihenfolge durchgeführt, ggf. können sich auch einige Schritte, beispielsweise (B) und (C), zeitlich überlagern, also parallel ablaufen. Im Schritt (B) können insbesondere überwiegend lineare Polymermoleküle gebildet werden, die im Schritt (D) zumindest teilweise miteinander vernetzt werden.

Im Schritt (C) kann ggf. ein Vernetzer (wie weiter unten beschrieben) zugegeben werden. Additive und/oder Weichmacher sind in einigen Ausführungsformen der erfindungsgemäßen Haftklebemasse vorgesehen. Diese können ggf. ebenfalls im Schritt (C) eingebracht werden. Der Schritt (C) kann grundsätzlich auch in mehreren Unterschritten erfolgen. Beispielsweise können erst ein oder mehrere klebirgmachende Harze und ggf. Additive zugegeben und untergemischt werden und dann später, vorzugsweise kurz vor der Vernetzung im Schritt (D), ein oder mehrere Vernetzer zugegeben werden.

Gemäß einer weiteren Ausführungsform wird die Polymerisation (Schritt (B)) in einem Lösungsmittel durchgeführt. Als Lösungsmittel kann beispielsweise Wasser, ein Gemisch aus organischen Lösungsmitteln oder ein Gemisch aus organischen Lösungsmitteln und Wasser verwendet werden. Im Allgemeinen wird dabei angestrebt, die verwendete Lösungsmittelmenge so gering wie möglich zu halten. Das Lösungsmittel kann hierzu beispielsweise im Schritt (A) beigemischt werden.

Vorzugsweise kann auch Schritt (C) teilweise oder ganz in dem Lösungsmittel durchgeführt werden, da dies eine Durchmischung erleichtert. Hierdurch kann eine besonders homogene Verteilung der Komponenten in der Haftklebemasse erhalten werden.

Geeignete organische Lösungsmittel können beispielsweise aus einer Gruppe ausgewählt sein, die reine Alkane, wie zum Beispiel Hexan, Heptan, Octan und Isooctan, aromatische Kohlenwasserstoffe, wie zum Beispiel Benzol, Toluol und Xylol, Ester, wie zum Beispiel Essigsäureethylester, Essigsäurepropyl-, -butyl- oder -hexylester, halogenierte Kohlenwasserstoffe, wie zum Beispiel Chlorbenzol, Alkanole, wie zum Beispiel Methanol, Ethanol, Ethylenglycol und Ethylenglycolmonomethylether, Ether, wie zum Beispiel Diethylether und Dibutylether, und Kombinationen hiervon umfasst.

Es kann ggf. ein mit Wasser mischbares oder hydrophiles Colösungsmittel zugesetzt werden, um zu gewährleisten, dass das Reaktionsgemisch während der Vernetzung als homogene Phase vorliegt. Geeignete Colösungsmittel können aus einer Gruppe ausgewählt sein, die aliphatischen Alkohole, Glycole, Ether, Glycolether, Pyrrolidine, N-Alkylpyrrolidinone, N-Alkylpyrrolidone, Polyethylenglycole, Polypropylenglycole, Amide, Carbonsäuren und Salzen davon, Ester, Organosulfide, Sulfoxide, Sulfone, Alkoholderivate, Hydroxyetherderivate, Aminoalkohole, Ketone und Kombinationen hiervon umfasst.

Gemäß einer weiteren Ausführungsform wird das Lösungsmittel in einem weiteren Schritt (E) entfernt. Dies kann insbesondere durch Erhitzen geschehen. Das Entfernen des Lösungsmittels kann beispielsweise in einem Trockenofen oder einem Trockenkanal erfolgen. Die eingeführte Energie kann ggf. zur (anteiligen) thermischen Vernetzung, also thermischen Härtung, verwendet werden. Der Schritt (E) kann demnach vor dem Schritt (D) erfolgen, sich teilweise oder ganz mit diesem überlagern oder diesem entsprechen.

Die Polymerisation (Schritt (B)) kann auch ohne Lösungsmittel, also in Substanz erfolgen. Zwar kann dann nach im Anschluss eines der oben genannten Lösungsmittel bzw. Lösungsmittelgemische für Schritt (C) zugegeben werden, doch wird dieser dann in Regel aus wirtschaftlichen Gründen auch in Abwesenheit von Lösungsmitteln durchgeführt.

Eine Polymerisation in Substanz eignet sich beispielsweise für die Herstellung von Acrylatschmelzhaftklebern. Hierbei bietet sich insbesondere die Präpolymerisationstechnik an. Die Polymerisation wird dann mit UV-Licht initiiert, aber nur zu einem geringen Umsatz von ca. 10 bis 30 % geführt. Anschließend kann der erhaltene Polymersirup beispielsweise in Folien eingeschweißt werden und dann in Wasser zu hohem Umsatz durchpolymerisiert werden. Diese

Pellets lassen sich dann als Acrylatschmelzhaftkleber einsetzen, wobei für den Aufschmelzvorgang bevorzugt Folienmaterialien eingesetzt werden, die mit dem Polyacrylat kompatibel sind.

Gemäß einer weiteren Ausführungsform wird das Polyacrylat für den Schritt (C) durch Erwärmen verflüssigt. Dies erleichtert die Mischbarkeit, insbesondere wenn ohne Lösungsmittel polymerisiert worden ist. "Verflüssigt" soll dabei bedeuten, dass ein festes Polyacrylat aufgeschmolzen oder bei einem zähflüssigen Polyacrylat die Viskosität stark erniedrigt wird. Ein Mischprozess in Abwesenheit von Lösungsmittel kann beispielsweise in einem geeigneten Zweischneckenextruder erfolgen.

Gemäß einer weiteren Ausführungsform wird im Schritt (B) eine radikalische Polymerisation durchgeführt. Für eine radikalisch verlaufende Polymerisation werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Initiatoren können beispielsweise im Schritt (A) zugesetzt werden. Prinzipiell eignen sich alle für Acrylate dem Fachmann geläufigen, üblichen Initiatoren. Die Erzeugung von C-zentrierten Radikalen ist im Houben Weyl, Methoden der Organischen Chemie, Vol. E 19a, S. 60 - 147 beschrieben, dessen Offenbarungsgehalt insofern hiermit durch Rückbezug aufgenommen wird. Diese Methoden können im Rahmen der Anmeldung ebenfalls Anwendung finden.

Beispiele für geeignete Radikalquellen sind Peroxide, Hydroperoxide und Azoverbindungen. Die Radikalinitiatoren können beispielsweise aus einer Gruppe ausgewählt werden, die Kaliumperoxodisulfat, Dibenzoylperoxid, Cumolhydroperoxid, Cyclohexanonperoxid, Di-t-butylperoxid, 2,2'-Azodi(2-methylbutyronitril), Azodiisosäurebutyronitril, Cyclohexylsulfonylacetylperoxid, Diisopropylpercarbonat, t-Butylperoktoat, Benzpinacol und eine Kombination hiervon umfasst. Bevorzugt können 1,1'-Azo-bis-(cyclohexancarbonsäurenitril) (Vazo 88™ der Fa. DuPont) und/oder Azodisobutyronitril (AIBN) verwendet werden.

Die Polymerisation kann beispielsweise in Polymerisationsreaktoren durchgeführt werden, die im Allgemeinen mit einem Rührer, mehreren Zulaufgefäßen, Rückflusskühler, Heizung und Kühlung versehen sind und für das Arbeiten unter $N_2$-Atmosphäre und Überdruck ausgerüstet sind.

Zur Initiierung der Polymerisation kann für thermisch zerfallende Initiatoren Wärme eingetragen werden. Die Polymerisation kann für thermisch zerfallende Initiatoren durch Erwärmen auf 50°C bis 160°C, je nach Initiatortyp, initiiert werden.

Die Polymerisationszeit im Schritt (B) kann - je nach Umsatz und Temperatur - zwischen 2 und 72 Stunden betragen. Je höher die Reaktionstemperatur gewählt werden kann, das heißt, je höher die thermische Stabilität des Reaktionsgemisches ist, desto geringer kann im Allgemeinen die Reaktionsdauer gewählt werden.

Die Polymerisation erfolgt im Allgemeinen so, dass für das Polyacrylat ein mittleres Molekulargewicht von 50000 bis 4000000 g/mol, insbesondere 100000 bis 3000000 g/mol und vorzugsweise 400000 bis 1400000 g/mol, erhalten wird.

Ein vergleichsweise niedriges Molekulargewicht oder eine vergleichsweise enge Molekulargewichtsverteilung kann erhalten werden, indem für die Vernetzung Regler, sogenannte Polymerisationsregler bzw. Kontrollreagenzien, zugesetzt werden. Diese eignen sich insbesondere für eine radikalische Vernetzung.

Als sogenannte Polymerisationsregler können zum Beispiel Alkohole, Aromaten, wie zum Beispiel Toluol, Ether, Dithioether, Dithiocarbonate, Trithiocarbonate, Nitroxide, Alkylbromide, Thiole, TEMPO und TEMPO-Derivate hinzugesetzt werden.

In einer weiteren Ausgestaltung werden als Polymerisationsregler Kontrollreagenzien der allgemeinen Formel (I) und/oder (II) eingesetzt:

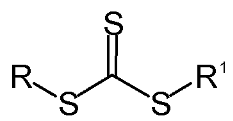
(I)

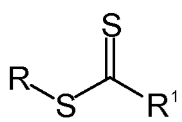
(II)

Hierbei können R und $R^1$ unabhängig voneinander ausgewählt werden als

- verzweigte und unverzweigte $C_1$- bis $C_{18}$-Alkylreste, $C_3$- bis $C_{18}$-Alkenylreste, $C_3$- bis $C_{18}$-Alkinylreste,
- $C_1$- bis $C_{18}$-Alkxoyreste,
- durch zumindest eine OH-Gruppe oder ein Halogenatom oder einen Silylether substituierte $C_1$- bis $C_{18}$-Alkylreste, $C_3$- bis $C_{18}$-Alkenylreste, $C_3$- bis $C_{18}$-Alkinylreste,
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Aminogruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste,

- $C_3$-$C_{12}$-Cycloalkylreste,
- $C_6$-$C_{18}$- Aryl- oder Benzylreste,
- Wasserstoff.

Kontrollreagenzien des Typs (I) und (II) beinhalten bevorzugt die folgenden Verbindungen bzw. Substituenten: Halogenatome sind hierbei bevorzugt F, Cl, Br oder I, mehr bevorzugt Cl und Br. Als Alkyl-, Alkenyl- und Alkinylreste in den verschiedenen Substituenten eignen sich sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl. Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinyl mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl oder Hydroxyhexyl.

Beispiele für Halogen-substituierte Alkylreste sind Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.

Als $C_3$-$C_{12}$-Cycloalkylreste dienen beispielsweise Cyclopropyl, Cyclopentyl, Cyclohexyl oder Trimethylcyclohexyl.

Als $C_6$-$C_{18}$-Arylreste dienen beispielsweise Phenyl, Naphthyl, Benzyl, 4-tert.-Butylbenzyl- oder weitere substituierte Phenyl, wie zum Beispiel Ethyl, Toluol, Xylol, Mesitylen, Isopropylbenzol, Dichlorobenzol oder Bromtoluol.

Weiterhin sind auch Verbindungen der folgenden Typen (III) und (IV) als Kontrollreagenzien einsetzbar

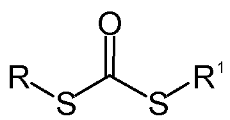

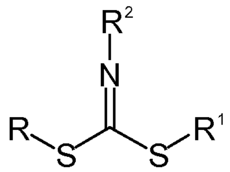

(III) (IV) ,

wobei $R^2$ ebenfalls und unabhängig von R und $R^1$ aus den oben aufgeführten Gruppen für diese Reste ausgewählt werden kann.

Bei einem konventionellen "RAFT-Prozess" wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen einsetzen, da der hohe Anteil an Restmonomeren die klebtechnischen Eigenschaften negativ beeinflusst. Vorzugsweise werden daher ggf. die oben genannten Kontrollreagenzien als Regler eingesetzt, sodass sich eine bimodale Molekulargewichtsverteilung einstellt. Durch sehr effiziente Regler kann weiterhin die Molekulargewichtsverteilung eingeschränkt (enger verteilt) werden, was sich wiederum positiv auf das klebtechnische Eigenschaftsprofil auswirkt.

Als weitere Regler können Nitroxide verwendet werden. Zur Radikalstabilisierung werden beispielsweise Nitroxide des Typs (Va) oder (Vb) eingesetzt:

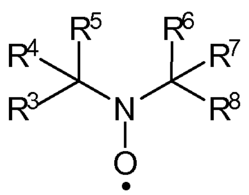

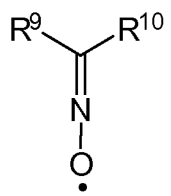

(Va) (Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie zum Beispiel Chlor, Brom oder Iod,
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$,

wobei $R^{11}$, $R^{12}$ oder $R^{13}$ für Reste aus der Gruppe ii) stehen.

Verbindungen der Typen (Va) oder (Vb) können auch an Polymerketten jeglicher Art gebunden sein, vorrangig in dem Sinne, dass zumindest einer der oben genannten Reste eine derartige Polymerkette darstellt und somit auch zum Aufbau der Haftklebemassen genutzt werden.

Weitere geeignete Regler für die Polymerisation sind Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL,
- 2,2,6,6-Tetramethyl-1-piperidinyloxy pyrrolidinyloxy (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1 -piperidinyloxyl, 2,2,6-Trimethyl-6-ethyl-1 - piperidinyloxyl,
- N-tert.-Butyl-1-phenyl-2-methyl propyl Nitroxid,
- N-tert.-Butyl-1-(2-naphtyl)-2-methyl propyl Nitroxid,
- N-tert.-Butyl-1-diethylphosphono-2,2-dimethyl propyl Nitroxid,
- N-tert.-Butyl-1-dibenzylphosphono-2,2-dimethyl propyl Nitroxid,
- N-(1-Phenyl-2-methyl propyl)-1-diethylphosphono-1-methyl ethyl Nitroxid,
- Di-t-Butylnitroxid,
- Diphenylnitroxid, und
- t-Butyl-t-amyl Nitroxid.

Weiterhin kann es von Vorteil sein, dass zur Umsatzerhöhung ein Initiator hinzugesetzt wird, der eine Vernetzungseffizienz von größer 5 besitzt. Solche Initiatoren sind zum Beispiel Perkadox 16 der Fa. Akzo Nobel.

Gemäß einer weiteren Ausführungsform wird im Schritt (B) eine anionische Polymerisation durchgeführt. Hierbei wird in der Regel ein Reaktionsmedium, insbesondere ein oder mehrere inerte Lösungsmittel, verwendet. Beispiele für solche Lösungsmittel sind aliphatische und cycloaliphatische Kohlenwasserstoffe oder auch aromatische Kohlenwasserstoffe.

Das lebende Polymer wird in diesem Fall im Allgemeinen durch die Struktur $P_L(A)$-Me repräsentiert, wobei Me ein Metall der Gruppe I, wie zum Beispiel Lithium, Natrium oder Kalium, und $P_L(A)$ ein wachsender Polymerblock aus den Monomeren A ist. Die Molmasse des herzustellenden Polymers wird durch das Verhältnis von Initiatorkonzentration zu Monomerkonzentration kontrolliert. Als geeignete Polymerisationsinitiatoren eignen sich zum Beispiel n-Propyllithium, n-Butyllithium, sec-Butyllithium, 2-Naphthyllithium, Cyclohexyllithium oder Octyllithium. Ferner können Initiatoren auf Basis von Samarium-Komplexen zur Polymerisation verwendet werden, wie es in Macromolecules, 1995, 28, 7886 beschrieben wird, dessen Offenbarungsgehalt insofern hiermit durch Rückbezug aufgenommen wird. Weiterhin können auch difunktionelle Initiatoren einsetzen, wie beispielsweise 1,1,4,4-Tetraphenyl-1,4-dilithiobutan oder 1,1,4,4-Tetraphenyl-1,4-dilithioisobutan eingesetzt werden. Coinitiatoren können ebenfalls eingesetzt werden. Geeignete Coinitiatoren sind unter anderem Lithiumhalogenide, Alkalimetallalkoxide oder Alkylaluminium-Verbindungen.

Gemäß einer weiteren Ausführungsform erfolgt im Schritt (D) die Vernetzung mittels Bestrahlung mit UV-Strahlung, mittels Bestrahlung mit einer ionisierenden Strahlung, thermisch oder durch eine Kombination hiervon.

Die Vernetzung kann insbesondere mittels UV-Strahlung oder mittels einer ionisierenden Strahlung, beispielsweise Elektronenstrahlung, erfolgen. Es kann beispielsweise durch kurzzeitige Bestrahlung mit UV-Strahlung im Bereich von 200 bis 400 nm mit handelsüblichen Quecksilber-Hochdruck oder Mitteldrucklampen mit einer Leistung von zum Beispiel 80 bis 240 W/cm oder mit ionisierender Strahlung, wie zum Beispiel Elektronenstrahlung, geschehen.

Ggf. kann ergänzend oder auch alternativ hierzu ein thermischer Härtungsschritt erfolgen. Dies kann beispielsweise beim Entfernen von Lösungsmittel oder auch in Substanz geschehen.

Gemäß einer weiteren Ausführungsform werden im Schritt (C) Vernetzer zugegeben. Dies kann insbesondere kurz vor dem Schritt (D) erfolgen, in dem die Vernetzer zum Tragen kommen. Die Wahl der Vernetzer richtet sich insbesondere nach der Art der Vernetzung.

Beispiele für geeignete Vernetzer für eine Elektronenstrahlvernetzung oder UV-Vernetzung sind bi- oder multifunktionelle Acrylate, bi- oder multifunktionelle Isocyanate (auch in blockierter Form) oder bi- oder multifunktionelle Epoxide. Diese werden typischerweise in Anteilen zwischen 0,1 und 5 Gewichtsteilen, insbesondere zwischen 0,2 und 3 Gewichtsteilen, bezogen auf 100 Gewichtsteile Polyacrylat hinzugegeben.

Gemäß einer weiteren Ausführungsform werden thermisch aktivierbare Vernetzer eingesetzt, die aus einer Gruppe ausgewählt sind, die Lewis-Säuren, Metallchelate, Metallsalze, bi- oder multifunktionelle Epoxide, bi- oder multifunktionelle Isocyanate und eine Kombination hiervon umfasst. Beispiele für Metallchelate sind Aluminiumchelat, zum Beispiel Aluminium-(III)-acetylacetonat, oder Titanchelat.

Der Vernetzungsgrad bei der thermischen Vernetzung kann beispielsweise durch die Menge des zugesetzten Vernetzers gesteuert werden. So werden beispielsweise für Polyacrylate mit hohem elastischen Anteil bevorzugt größer 0,5 Gewichtsteile, insbesondere größer 0,75 Gewichtsteile Metallchelat oder Epoxyverbindung oder Isocyanatverbindung bezogen auf 100 Gewichtsteile Polyacrylat Basispolymer hinzugesetzt. Es werden bevorzugt mehr als 1,0 Gewichtsteile eingesetzt. Es sollten in der Regel nicht mehr als 10 Gewichtsteile Vernetzer hinzugegeben werden, um eine vollständige Verlackung zu vermeiden.

Für eine mögliche Vernetzung mit UV-Strahlung können freie UV-absorbierende Photoinitiatoren eingesetzt werden, also Photoinitiatoren, die nicht eine oder mehrere Doppelbindungen tragen und somit nicht in das Polymer einpolymerisiert werden können. Auf solche Photoinitiatoren kann verzichtet werden, wenn Monomere C eingesetzt werden, die selber Photoinitiatoren sind, wie es oben beschrieben wurde. Es ist aber auch eine Kombination aus freien Photoinitiatoren und solchen Monomeren C möglich.

Geeignete Photoinitiatoren sind beispielsweise Benzoinether, wie zum Beispiel Benzoinmethylether und Benzoinisopropylether, substituierte Acetophenone, wie zum Beispiel 2,2-Diethoxyacetophenon (erhältlich als Irgacure 651® von Fa. Ciba Geigy), 2,2-Dimethoxy-2-phenyl-1-phenylethanon, Dimethoxyhydroxyacetophenon, substituierte $\alpha$-Ketole, wie zum Beispiel 2-Methoxy-2-hydroxypropiophenon, aromatische Sulfonylchloride, wie zum Beispiel 2-Naphthylsulfonylchlorid, und photoaktive Oxime, wie zum Beispiel 1-Phenyl-1,2-propandion-2-(O-ethoxycarbonyl)oxim.

Die oben erwähnten und weitere einsetzbare Photoinitiatoren und andere vom Typ Norrish I oder Norrish II können beispielsweise folgende Substituenten enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben, deren Offenbarungsgehalt insofern hiermit durch Rückbezug aufgenommen wird. Des Weiteren wird auf Carroy et al. in "Chemistry and Technology of UV and EB Formulation for Coatings, Inks and Paints", Oldring (Hrsg.), 1994, SITA, London hingewiesen, dessen Offenbarungsgehalt insofern hiermit durch Rückbezug aufgenommen wird.

Als weiterer Aspekt der Anmeldung wird die Herstellung eines Klebebandes angegeben. Zumindest nach einer Ausführungsform lässt sich das Verfahren zur Herstellung des Klebebandes in das erfindungsgemäße Verfahren zur Herstellung einer Haftklebemasse integrieren. Es kann daher auch als weitere Ausführungsform(en) des Verfahrens zur Herstellung einer Haftklebemasse angesehen werden. Gemäß zumindest einer Ausführungsform wird zur Herstellung eines Klebebandes, wobei das Klebeband eine Haftklebemasse nach zumindest einer erfindungsgemäßen Ausführungsform und einen Träger umfasst, der Träger mit der Haftklebemasse versehen.

Gemäß einer weiteren Ausführungsform wird der Träger mit der Haftklebemasse versehen, indem die nach dem Schritt (C) erhaltene Mischung auf den Träger aufgetragen und im Anschluss im Schritt (D) vernetzt wird. Das Auftragen erfolgt insbesondere schichtförmig, sodass eine Klebeschicht ausgebildet wird. Der Träger kann ein permanenter oder ein temporärer Träger sein.

In weiteren, optionalen Verfahrensschritten kann das Klebeband mit weiteren, ggf. auch erfindungsgemäßen Haftklebeschichten versehen werden. Es können ggf. weitere Träger im Klebeband eingebracht werden. Es können ggf. auch weitere, dem Fachmann bekannte Schritte, wie zum Beispiel ein Zuschneiden des Klebebandes, erfolgen.

Als weiterer Aspekt der Anmeldung wird ein Klebeband angegeben. Das Klebeband umfasst einen Träger und eine Klebeschicht, die eine Haftklebemasse nach zumindest einer erfindungsgemäßen Ausführungsform umfasst oder daraus besteht. Die Haftklebemasse kann also schichtförmig, insbesondere unmittelbar, auf dem Träger angeordnet sein. Sie kann ein Teil einer Klebeschicht sein oder diese ganz ausbilden. Sie bildet vorzugsweise eine Klebeschicht vollständig aus. Eine Klebeschicht kann eine Seite des Trägers ganz oder teilweise bedecken.

Als Träger können grundsätzlich permanente und/oder temporäre Träger verwendet werden. Permanente Träger bleiben im Klebeband erhalten, während temporäre Träger zum Verkleben entfernt werden. Sie werden hauptsächlich zum Schutz und zum Transport des Klebebandes eingesetzt.

Als permanente Träger eignen sich grundsätzlich alle dem Fachmann bekannten Materialien. Sie können beispielsweise aus Folien, die zum Beispiel auf Polyester, PET, PE, PP, BOPP oder PVC basieren, Vliesen, Schäumen, Geweben und Gewebefolien ausgewählt werden.

Als temporäre Träger eignen sich grundsätzlich alle dem Fachmann bekannten Materialien. Sie können beispielsweise aus Trennpapier, zum Beispiel basierend auf Glassine, HDPE oder LDPE, Trennfolien, zum Beispiel basierend auf PET, MOPP oder PE, anderen antiadhäsiv ausgestatteten Materialien, wie zum Beispiel silikonisierte oder

PE-überzogene Papiere oder Folien, ausgewählt werden.

Gemäß einer weiteren Ausführungsform umfasst das Klebeband nur eine Klebeschicht, wobei diese Klebeschicht die erfindungsgemäße Haftklebemasse umfasst oder daraus besteht. Klebebänder dieser Ausführungsform können vorzugsweise zwei, ggf. unabhängig voneinander ausgewählte, temporäre Träger, wie oben beschrieben, umfassen, sodass das Klebeband als so-genanntes Transferklebeband ausgebildet ist. Die Träger sind vorzugsweise auf gegenüberliegenden Seiten der Haftklebemasse angeordnet, sodass nach dem Aufrollen das Transferklebeband wieder abrollbar ist. Bei einem Transferklebeband verbleibt nach dem Verkleben in der Regel nur die Haftklebemasse. Das erfindungsgemäße Klebeband kann also als Transferklebeband ausgebildet sein. Es wird in der Regel aufgrund der hohen Harzanteile nicht zur Verklebung von optischen Bauteilen verwendet, da bei hoher Feuchtigkeit Eintrübungen möglich wären oder eine Gelbfärbung unter längerer thermischer Lagerung auftreten kann.

Gemäß einer weiteren Ausführungsform umfasst das Klebeband zwei oder mehr, insbesondere zwei, Klebeschichten, von denen mindestens eine Haftklebemasse nach zumindest einer erfindungsgemäßen Ausführungsform umfasst oder daraus besteht.

Bei Klebebändern dieser Ausführungsform wird vorzugsweise ein permanenter Träger verwendet. Dieser kann auf einer Seite teilweise oder vollständig mit einer erfindungsgemäßen Haftklebemasse beschichtet sein. Auf der gegenüberliegenden Seite ist ganz oder teilweise eine weitere Klebeschicht erzeugt. Diese kann ebenfalls eine erfindungsgemäße Haftklebemasse mit gleichen oder unterschiedlichen Eigenschaften umfassen oder daraus bestehen oder auch eine herkömmliche Klebeschicht sein. Für einige Anwendungen sind Klebebänder mit zwei unterschiedlichen Klebeschichten vorteilhaft. Beispielsweise kann eine Kombination aus einer erfindungsgemäßen stark, weitgehend irreversible anhaftenden Klebeschicht und einer reversible anhaftenden Klebeschicht, die vom Untergrund wieder abgelöst werden kann, vorteilhaft sein.

Die Klebeschichten können auf der vom permanenten Träger abgewandten Seite mit einem temporären Träger versehen sein. Hierdurch kann das Klebeband beispielsweise auf und wieder abgerollt werden.

Als weiterer Aspekt der Anmeldung wird eine Verwendung einer Haftklebemasse angegeben. Eine Haftklebemasse nach zumindest einer erfindungsgemäßen Ausführungsform wird zur Verklebung von Untergründen mit einer Oberflächenenergie von weniger als 40 dyn/$cm^2$, insbesondere weniger als 35 dyn/$cm^2$ oder sogar weniger als 30 dyn/cm2, verwendet. Die Verwendung umfasst beispielsweise das Verkleben von LSE-Materialien wie UV-härtende Lacke, Pulverbeschichtungen, sowie Polyolefine wie Polypropylen (PP), Hochdruck-Polyethylen (LDPE), Niederdruck-Polyethylen (HDPE), ultrahochmolekulares Polyethylen (UHMWPE) und Polymere aus Ethylen-Propylen-Dien-Monomer (EPDM) sowie das Verkleben von Materialien, die neben einer niedrigen Oberflächenenergie eine raue Oberfläche und darüber hinaus geringe Shore A Härten von weniger als 50, insbesondere weniger als 40, besitzen, wobei solche Materialien beispielsweise aus offenzelligen Schäumen aus PE, EPDM, Polyester oder Polyurethan ausgewählt sind.

Als weiterer Aspekt der Anmeldung wird eine Verwendung von Monomeren angegeben. Nach zumindest einer Ausführungsform wird ein Acrylsäureester der Formel $CR^3_2 = C(R^2)(COOR^1)$ zur Herstellung einer Haftklebemasse verwendet, wobei $R^1$ eine verzweigte Alkylgruppe mit 16 bis 22 C-Atomen ist, die mindestens zwei Verzweigungsstellen aufweist, $R^2$ aus H, Methyl oder Halogen ausgewählt ist, und

$R^3$ jeweils unabhängig voneinander aus H oder Halogen ausgewählt ist. Der Acrylsäureester entspricht einem Monomer A nach zumindest einer der oben beschriebenen Ausführungsformen. Der Acrylsäureester kann insbesondere zur Herstellung einer Haftklebemasse, die zur Verklebung von Untergründen mit einer Oberflächenenergie von weniger als 40 dyn/$cm^2$, insbesondere weniger als 35 dyn/$cm^2$ oder sogar weniger als 30 dyn/$cm^2$, geeignet ist, verwendet werden.

Testmethoden

Zur Charakterisierung von Polyacrylaten bzw. der Haftklebemassen können die im Folgenden dargestellten Testmethoden verwendet werden.

Gelpermeationschromatographie (GPC) (Test A):

Die Bestimmung des mittleren Molekulargewichtes Mw, und der Polydispersität PD erfolgte in dem Eluent THF mit 0,1 Vol-% Trifluoressigsäure (Vol-% = Volumenprozent). Die Messung erfolgte bei 25°C. Als Vorsäule wurde PSS-SDV, 5 $\mu$m, $10^3$ Å, ID 8,0 mm x 50 mm verwendet. Zur Auftrennung wurden die Säulen PSS-SDV, 5 $\mu$m, $10^3$ Å sowie $10^5$ Å und $10^6$ Å mit jeweils ID 8,0 mm x 300 mm eingesetzt (1 Å = $10^{-10}$ m). Die Probenkonzentration betrug 4 g/l, die Durchflussmenge 1,0 ml pro Minute. Es wurde gegen PMMA-Standards gemessen.

Rheometermessungen (Test B):

Die Messungen wurden mit einem Rheometer des Typs "RDA II" der Fa. Rheometrics Dynamic Systems in Platte-auf-Platte-Konfiguration durchgeführt. Vermessen wurde eine runde Probe mit einem Probendurchmesser von

8 mm und einer Probendicke von 1 mm. Die runde Probe wurde aus einer trägerlosen 1 mm dicken Klebefolie ausgestanzt. Messbedingungen: Temperatursweep von -30°C bis 130°C bei 10 rad/s.

180° Klebkrafttest (Test C):

Die Messung der 180° Klebkraft erfolgt nach PSTC-1. Ein 20 mm breiter Streifen einer auf Polyester aufgetragenen Haftklebemasse wurde auf einer HDPE oder PP Platte aufgebracht. Der Haftklebemassenstreifen wurde zweimal mit einem 2 kg Gewicht auf das Substrat aufgedrückt. Das Klebeband wurde anschließend sofort mit 300 mm/min und im 180° Winkel vom Substrat abgezogen. Die PE und PP Platten wurden zuvor zweimal mit Aceton und einmal mit Isopropanol gewaschen. Die Messergebnisse sind in N/cm angegeben und sind gemittelt aus drei Messungen. Alle Messungen wurden bei Raumtemperatur unter klimatisierten Bedingungen durchgeführt.

<u>Beispiele</u>

Die folgenden Beispiele dienen dazu, den Inhalt der Anmeldung näher erläutern, ohne dass die Auswahl der Beispiele den Gehalt der Anmeldung irgendeiner Weise beschränken soll.

Beispiel 1 (Polymer 1):

Ein für radikalische Polymerisationen konventioneller 2 L-Glasreaktor wurde mit 8 g Acrylsäure, 196 g 2-Ethylhexylacrylat, 196 g eines Gemischs von Monomeren A, bei denen $R^2 = R^3 = H$ und $R^1$ eine C17-Alkylkette mit drei Verzweigungsstellen ist und die Glasübergangstemperatur des Homopolymers bei-72°C liegt, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58°C geheizt und 0,2 g 2,2'-Azodi(2-methylbutyronitril)(Vazo 67™ der Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurden 20 g Isopropanol hinzugegeben. Nach 2,5 h wurde mit 100 g Aceton verdünnt. Nach 4 h Reaktionszeit wurden nochmals 0,2 g Vazo 67™ hinzugegeben. Nach 7 h Polymerisationszeit wurde mit 100 g Siedegrenzbenzin 60/95, nach 22 h mit 100 g Aceton verdünnt. Nach 24 h Reaktionszeit wurde die Polymerisation abgebrochen und das Reaktionsgefäß auf Raumtemperatur abgekühlt. Das Polymer wurde nach Testmethode A analysiert. Das Molekulargewicht betrug 718000 g/mol.

Beispiel 2 (Polymer 2):

Ein für radikalische Polymerisationen konventioneller 2 L-Glasreaktor wurde mit 8 g Acrylsäure, 392 g eines Gemischs von Monomeren A, bei denen $R^2 = R^3 = H$ und $R^1$ eine C17-Alkylkette mit drei Verzweigungsstellen ist und die Glasübergangstemperatur des Homopolymers bei-72°C liegt, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58°C geheizt und 0,2 g Vazo 67™ (Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurden 20 g Isopropanol hinzugegeben. Nach 2,5 h wurde mit 100 g Aceton verdünnt. Nach 4 h Reaktionszeit wurden nochmals 0,2 g Vazo 67™ hinzugegeben. Nach 7 h Polymerisationszeit wurde mit 100 g Siedegrenzbenzin 60/95, nach 22 h mit 100 g Aceton verdünnt. Nach 24 h Reaktionszeit wurde die Polymerisation abgebrochen und das Reaktionsgefäß auf Raumtemperatur abgekühlt. Das Polymer wurde nach Testmethode A analysiert. Das Molekulargewicht betrug 674000 g/mol.

Vergleichsbeispiel 1 (Referenzpolymer 1):

Ein für radikalische Polymerisationen konventioneller 2 L-Glasreaktor wurde mit 8 g Acrylsäure, 192 g Isobornylacrylat (IBOA), 192 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58°C geheizt und 0,2 g Vazo 67™ (Fa. DuPont) hinzugegeben. Anschließend wurde das äußere Heizbad auf 75°C erwärmt und die Reaktion konstant bei dieser Außentemperatur durchgeführt. Nach 2,5 h Reaktionszeit wurde mit 100 g Aceton verdünnt. Nach 4 h Reaktionszeit wurden nochmals 0,2 g Vazo 67™ hinzugegeben. Nach 5 h Polymerisationszeit wurde mit 100 g Aceton, nach 6 h mit 100 g Siedegrenzbenzin 60/95 verdünnt. Nach 24 h Reaktionszeit wurde die Polymerisation abgebrochen und das Reaktionsgefäß auf Raumtemperatur abgekühlt. Das Polymer wurde nach Testmethode A analysiert. Das Molekulargewicht betrug 703000 g/mol.

Vergleichsbeispiel 2 (Referenzpolymer 2):

Ein für radikalische Polymerisationen konventioneller 2 L-Glasreaktor wurde mit 8 g Acrylsäure, 120 g Stearylacrylat 16/18 (SA 1618, BASF SE), 272 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58°C geheizt und 0,2 g Vazo 67™ (Fa. DuPont) hinzugegeben. Anschließend wurde das äußere Heizbad auf 75°C erwärmt und die Reaktion konstant bei dieser Außentemperatur durchgeführt. Nach 2,5 h Reaktionszeit wurde mit 100 g Aceton verdünnt. Nach 4 h Reaktionszeit wurden nochmals 0,2 g Vazo 67™ hinzugegeben. Nach 5 h Polymerisationszeit wurde mit 100 g Aceton, nach 6 h mit 100 g Siedegrenzbenzin 60/95 verdünnt. Nach 24 h Reaktionszeit wurde die Polymerisation abgebrochen und das Reaktionsgefäß auf Raumtemperatur abgekühlt. Das Polymer wurde nach Testmethode A analysiert. Das Molekulargewicht betrug 588000 g/mol.

Abmischung mit Harzen und Vernetzern, thermische Härtung:

Das Polymer wurde mit verschiedenen Harzen und Vernetzern in Lösung unter Rühren abgemischt. Die Haftklebemassenmischungen werden aus Lösung mit einem Feststoffgehalt von 28% auf eine mit Saran geprimerte 23 μm dicke PET-Folie aufgetragen und für 10 Minuten bei 120°C getrocknet. Der Masseauftrag betrug nach der Trocknung 50 g/m$^2$.

Materialien:

Foral® 85, Kolophoniumester Harz der Firma Eastman, Erweichungsbereich liegt bei 85°C. Sylvares® TP105P, Terpenphenolharz der Firma Arizawa, Erweichungsbereich zwischen 102 und 108°C.
Al-(III)-chelat: Aluminium-(III)-acetylacetonat.

Im Folgenden werden die Ergebnisse beschrieben.

In Tabelle 1 sind die Zusammensetzungen der erfindungsgemäßen Beispiele aufgeführt:

Tabelle 1

| Beispiel | Polymer 1 | Polymer 2 | Harz | Vernetzer | tan δ bei 130°C/10 rad s (Test B) |
|---|---|---|---|---|---|
| 1 | X | | 35% Foral 85 | 0,3 % Al-(III)-Chelat | 0,43 |
| 2 | X | | 35% Sylvares 105 | 0,3 % Al-(III)-Chelat | 0,37 |
| 3 | X | | 45% Foral 85 | 0,3 % Al-(III)-Chelat | 0,35 |
| 4 | | X | 35% Foral 85 | 0,3 % Al-(III)-Chelat | 0,45 |
| 5 | | X | 40% Foral 85 | 0,3 % Al-(III)-Chelat | 0,42 |
| 6 | | X | 45% Foral 85 | 0,3 % Al-(III)-Chelat | 0,38 |

In Tabelle 2 sind die Zusammensetzungen der Vergleichsbeispiele aufgeführt:

Tabelle 2

| Vergleichsbeispiel | Referenzpolymer 1 | Referenzpolymer 2 | Harz | Vernetzer | tan δ bei 130°C/10 rad s (Test B) |
|---|---|---|---|---|---|
| 1 | X | | 35% Foral 85 | 0,3 % Al-(III)-Chelat | 0,24 |
| 2 | X | | 35% Sylvares 105 | 0,3 % Al-(III)-Chelat | 0,22 |
| 3 | X | | 45 % Foral 85 | 0,3 % Al-(III)-Chelat | 0,20 |
| 4 | | X | 35 % Foral 85 | 0,3 % Al-(III)-Chelat | 0,28 |
| 5 | | X | 40 % Foral 85 | 0,3 % Al-(III)-Chelat | 0,24 |

(fortgesetzt)

| Tabelle 2 | | | | | |
|---|---|---|---|---|---|
| Vergleichsbeispiel | Referenzpolymer 1 | Referenzpolymer 2 | Harz | Vernetzer | tan δ bei 130°C/10 rad s (Test B) |
| 6 | | X | 45 % Foral 85 | 0,3 % Al-(III)-Chelat | 0,22 |

Die erfindungsgemäßen Beispiele weisen im Polyacrylat mit 49 bzw. 98 Gew-% einen hohen Anteil an Monomeren A auf. Das Referenzpolymer 1 weist mit 49 Gew-% IBOA ebenfalls einen hohen Anteil einer unpolaren Komponente auf, die aber die statische Glasübergangstemperatur der Klebemasse heraufsetzt. Referenzpolymer 2 weist mit Stearylacrylat 16/18 ein Monomer mit einer langen, jedoch linearen Alkylgruppe auf, das ebenfalls die Glasübergangstemperatur erhöht.

Zum Vergleich und zum Testen der Klebkraft (abgekürzt mit KK) auf unpolaren Oberflächen wurden alle Polymere mit zwei unterschiedlichen Harzen abgemischt. Der Vernetzeranteil wurde mit 0,3 % Aluminium-(III)-chelat konstant gehalten. Die gemessenen tan δ Werte liegen für die erfindungsgemäßen Beispiele in einem vorteilhaften Bereich von 0,38 bis 0,45, für die Vergleichsbeispiele in einem weniger vorteilhaften Bereich von 0,20 bis 0,28.

In der folgenden Tabelle 3 sind klebtechnischen Eigenschaften der einzelnen erfindungsgemäßen Beispiele aufgelistet:

| Tabelle 3 | | |
|---|---|---|
| Beispiel | KK PE [N/cm] (Test C) | KK PP [N/cm] (Test C) |
| 1 | 3,9 | 4,2 |
| 2 | 3,5 | 3,9 |
| 3 | 4,8 | 4,6 |
| 4 | 3,8 | 4,3 |
| 5 | 4,2 | 4,5 |
| 6 | 5,0 | 5,6 |

In der folgenden Tabelle 4 sind klebtechnischen Eigenschaften der einzelnen Vergleichsbeispiele aufgelistet:

| Tabelle 4 | | |
|---|---|---|
| Vergleichs Beispiel | KK PE [N/cm] (Test C) | KK PP [N/cm] (Test C) |
| 1 | 0,3 | 0,3 |
| 2 | 0,4 | 0,2 |
| 3 | 0,3 | 0,2 |
| 4 | 0,5 | 0,4 |
| 5 | 0,3 | 0,6 |
| 6 | 0,5 | 0,3 |

Den erfindungsgemäßen Beispielen kann entnommen werden, dass die Klebkräfte auf einem sehr hohen Niveau sowohl auf Polyethylen (PE) als auf Polypropylen (PP) liegen. Beide Substrate weisen eine Oberflächenspannung von ca. 30 dyn/cm$^2$ auf und liegen somit im unpolaren Bereich. Die gemessen Klebkräfte betragen mindestens 3,5 N/cm.

Die Vergleichsbeispiele 1 bis 6 sind hingegen sehr klebschwach. Die Klebkräfte liegen alle deutlich unter 1 N/cm. Des Weiteren zeigen die Klebemassen ein starkes "Rattern". Dies deutet auf eine relativ hohe Glasübergangstemperatur hin. Zudem besitzt Stearylacrylat eine Tendenz zur Seitenkettenkristallisation.

Die erfindungsgemäßen Beispiele belegen hingegen, dass mit den Monomeren A, die eine hochverzweigte langkettige Alkylgruppe $R^1$ aufweisen, große Mengen klebrigmachender Harze zugesetzt werden können, sodass sich auf diesem Weg auch hohe Klebkräfte, insbesondere auf unpolaren Untergründen, erzielen lassen.

## Patentansprüche

1. Haftklebemasse umfassend:

- ein zumindest teilweise vernetztes Polyacrylat auf Basis eines Monomerengemischs, wobei das Monomerengemisch

a) 5 bis 100 Gew-% Acrylsäureester der Formel $CR^3_2 = C(R^2)(COOR^1)$ als Monomere A, wobei $R^1$ eine verzweigte Alkylgruppe mit 16 bis 22 C-Atomen ist, die mindestens zwei Verzweigungsstellen aufweist, $R^2$ aus H, Methyl oder Halogen ausgewählt ist, und $R^3$ jeweils unabhängig voneinander aus H oder Halogen ausgewählt ist,
b) 0 bis 20 Gew-% Acrylsäure der Formel $CR^5_2 = C(R^4)(COOH)$ als Monomere B, wobei $R^4$ aus H, Methyl oder Halogen ausgewählt ist, und $R^5$ jeweils unabhängig voneinander aus H oder Halogen ausgewählt ist,
c) 0 bis 30 Gew-% olefinisch ungesättigter Monomere mit mindestens einer funktionellen Gruppe als Monomere C, wobei die Monomere C nicht unter die Monomere A, B und D fallen, und
d) 0 bis 95 Gew-% Acrylsäureester der Formel $CR^8_2 = C(R^7)(COOR^6)$ als Monomere D, wobei $R^6$ eine lineare, einfach verzweigte, cyclische oder polycyclische Alkylgruppe mit 1 bis 14 C-Atomen ist, $R^7$ aus H, Methyl oder Halogen ausgewählt ist, und $R^8$ jeweils unabhängig voneinander aus H oder Halogen ausgewählt ist,
umfasst;

- zumindest ein klebrigmachendes Harz, das in einem Anteil von 20 bis 60 Gewichtsteilen bezogen auf 100 Gewichtsteile Polyacrylat vorliegt.

2. Haftklebemasse nach Anspruch 1, wobei mindestens die Hälfte der Monomere A eine Alkylgruppe $R^1$ mit drei oder mehr Verzweigungsstellen aufweist.

3. Haftklebemasse nach einem der vorhergehenden Ansprüche, wobei bei den Monomeren A $R^2$ aus H oder Methyl ausgewählt ist und $R^3$ = H ist.

4. Haftklebemasse nach einem der vorhergehenden Ansprüche, wobei die Alkylgruppen $R^1$ der Monomere A eine Hauptkette aufweisen, an der an den Verzweigungsstellen Seitenketten angebunden sind, und mindestens 75% der Seitenketten 2 bis 4 C-Atome aufweisen.

5. Haftklebemasse nach einem der vorhergehenden Ansprüche, wobei das klebrigmachende Harz ein mittleres Molekulargewicht von weniger als 4000 g/mol (bestimmt mittels Gelpermeationschromatographie) aufweist.

6. Haftklebemasse nach einem der vorhergehenden Ansprüche, wobei das klebrigmachende Harz aus einer Gruppe ausgewählt ist, die Pinen-, Inden- und Kolophoniumharze sowie deren disproportionierte, hydrierte, polymerisierte oder veresterte Derivate und Salze, aliphatische Kohlenwasserstoffharze, alkylaromatische Kohlenwasserstoffharze, aromatische Kohlenwasserstoffharze, Terpenharze, Terpenphenolharze, C5- und C9-Kohlenwasserstoffharze, die zumindest teilweise hydriert sein können, Naturharze und Kombinationen hiervon umfasst.

7. Haftklebemasse nach einem der vorhergehenden Ansprüche, wobei das klebrigmachende Harz einen DACP Wert (Messmethode analog ASTM D6038) von größer 0°C aufweist.

8. Haftklebemasse nach einem der Ansprüche 1 bis 6, wobei das klebrigmachende Harz einen DACP Wert (Messmethode analog ASTM D6038) von weniger als -20°C aufweist.

9. Haftklebemasse nach einem der vorhergehenden Ansprüche, wobei bei den Monomeren D $R^6$ aus einer Gruppe ausgewählt ist, die Methyl, Ethyl, Propyl, Pentyl, Hexyl, Heptyl, Octyl, Nonyl, Decyl, Undecyl, Lauryl sowie deren verzweigte Isomere, Cycloalkylgruppen und polycyclische Alkylgruppen, wobei die Cycloalkylgruppen und polycyclischen Alkylgruppen mit Alkylgruppen, Halogenatomen oder Cyanogruppen substituiert sein können, und Kombinationen hiervon umfasst.

10. Haftklebemasse nach einem der vorhergehenden Ansprüche, wobei das Monomerengemisch einen Anteil von mindestens 80 Gew-% Monomere A oder von mindestens 80 Gew-% an den Monomeren A und D zusammen umfasst.

**11.** Haftklebemasse nach Anspruch 10, wobei das klebrigmachende Harz in einem Anteil von mindestens 40 Gewichtsteilen bezogen auf 100 Gewichtsteile Polyacrylat vorliegt.

**12.** Haftklebemasse nach einem der vorhergehenden Ansprüche, wobei das Monomerengemisch einen Anteil an Monomeren A von bis zu 40 Gew-%, insbesondere 5 bis 15 Gew-%, enthält.

**13.** Haftklebemasse nach einem der vorhergehenden Ansprüche, wobei das Monomerengemisch einen Anteil von 0,01 bis 10 Gew-% Monomere B und/oder von 0,01 bis 20 Gew-% Monomere C umfasst.

**14.** Verfahren zur Herstellung einer Haftklebemasse, umfassend die Schritte:

(A) Erzeugen eines Monomerengemischs, wobei das Monomerengemisch

a) 5 bis 100 Gew-% Acrylsäureester der Formel $CR^3_2 = C(R^2)(COOR^1)$ als Monomere A, wobei $R^1$ eine verzweigte Alkylgruppe mit 16 bis 22 C-Atomen ist, die mindestens zwei Verzweigungsstellen aufweist, $R^2$ aus H, Methyl oder Halogen ausgewählt ist, und $R^3$ jeweils unabhängig voneinander aus H oder Halogen ausgewählt ist,
b) 0 bis 20 Gew-% Acrylsäure der Formel $CR^5_2 = C(R^4)(COOH)$ als Monomere B, wobei $R^4$ aus H, Methyl oder Halogen ausgewählt ist, und $R^5$ jeweils unabhängig voneinander aus H oder Halogen ausgewählt ist,
c) 0 bis 30 Gew-% olefinisch ungesättigter Monomere mit mindestens einer funktionellen Gruppe als Monomere C, wobei die Monomere C nicht unter die Monomere A, B und D fallen, und
d) 0 bis 95 Gew-% Acrylsäureester der Formel $CR^8_2 = C(R^7)(COOR^6)$ als Monomere D, wobei
$R^6$ eine lineare, einfach verzweigte, cyclische oder polycyclische Alkylgruppe mit 1 bis 14 C-Atomen ist, $R^7$ aus H, Methyl oder Halogen ausgewählt ist, und $R^8$ jeweils unabhängig voneinander aus H oder Halogen ausgewählt ist,
umfasst;

(B) Polymerisieren des Monomerengemischs unter Ausbildung von Polyacrylat;
(C) Mischen des Polyacrylats mit zumindest einem klebrigmachenden Harz, das in einem Anteil von 20 bis 60 Gewichtsteilen bezogen auf 100 Gewichtsteile Polyacrylat eingesetzt wird; und
(D) zumindest teilweises Vernetzen einer nach dem Schritt (C) erhaltenen Mischung unter Ausbildung der Haftklebemasse.

**15.** Verfahren nach Anspruch 14, wobei Schritt (B) in einem Lösungsmittel durchgeführt wird.

**16.** Verfahren nach Anspruch 15, wobei in einem weiteren Schritt (E) das Lösungsmittel durch Erhitzen entfernt wird.

**17.** Verfahren nach Anspruch 14, wobei das Polyacrylat für den Schritt (C) durch Erwärmen verflüssigt wird.

**18.** Verfahren nach einem der Ansprüche 14 bis 17, wobei im Schritt (D) die Vernetzung mittels Bestrahlung mit UV-Strahlung, mittels Bestrahlung mit einer ionisierenden Strahlung, thermisch oder durch eine Kombination hiervon erfolgt.

**19.** Verfahren nach einem der Ansprüche 14 bis 18 zur Herstellung eines Klebebandes, wobei das Klebeband eine Haftklebemasse nach einem der Ansprüche 1 bis 13 und einen Träger umfasst und wobei der Träger mit der Haftklebemasse versehen wird.

**20.** Verfahren nach Anspruch 19, wobei der Träger mit der Haftklebemasse versehen wird, indem die nach dem Schritt (C) erhaltene Mischung auf den Träger aufgetragen und im Anschluss im Schritt (D) vernetzt wird.

**21.** Klebeband, das einen Träger und zumindest eine Klebeschicht, die eine Haftklebemasse nach einem der Ansprüche 1 bis 13 umfasst, aufweist.

**22.** Verwendung einer Haftklebemasse nach einem der Ansprüche 1 bis 13 zur Verklebung von Untergründen mit einer Oberflächenenergie von weniger als 40 $dyn/cm^2$.

**23.** Verwendung eines Acrylsäureesters der Formel $CR^3_2 = C(R^2)(COOR^1)$ zur Herstellung einer Haftklebemasse, wobei $R^1$ eine verzweigte Alkylgruppe mit 16 bis 22 C-Atomen ist, die mindestens zwei Verzweigungsstellen aufweist,

$R^2$ aus H, Methyl oder Halogen ausgewählt ist, und $R^3$ jeweils unabhängig voneinander aus H oder Halogen ausgewählt ist.

## Claims

1. Pressure sensitive adhesive comprising:

- an at least partly crosslinked polyacrylate based on a monomer mixture, the monomer mixture comprising

a) 5 to 100 wt% of acrylic esters of the formula $CR^3_2 = C(R^2)\ (COOR^1)$ as monomers A, where $R^1$ is a branched alkyl group having 16 to 22 C atoms which has at least two branching sites, $R^2$ is selected from H, methyl or halogen, and $R^3$ independently at each occurrence is selected from H or halogen,
b) 0 to 20 wt% of acrylic acid of the formula $CR^5_2 = C(R^4)\ (COOH)$ as monomers B, where $R^4$ is selected from H, methyl or halogen, and $R^5$ independently at each occurrence is selected from H or halogen,
c) 0 to 30 wt% of olefinically unsaturated monomers having at least one functional group as monomers C, where the monomers C do not fall within the monomers A, B, and D, and
d) 0 to 95 wt% of acrylic esters of the formula $CR^8_2 = C(R^7)\ (COOR^6)$ as monomers D, where $R^6$ is a linear, singly branched, cyclic or polycyclic alkyl group having 1 to 14 C atoms, $R^7$ is selected from H, methyl or halogen, and $R^8$ independently at each occurrence is selected from H or halogen;

- at least one tackifying resin, which is present in a proportion of 20 to 60 parts by weight per 100 parts by weight of polyacrylate.

2. Pressure sensitive adhesive according to Claim 1, at least half of the monomers A including an alkyl group $R^1$ having three or more branching sites.

3. Pressure sensitive adhesive according to one of the preceding claims, $R^2$ being selected from H or methyl and $R^3$ being H in the monomers A.

4. Pressure sensitive adhesive according to any of the preceding claims, the alkyl groups $R^1$ of the monomers A having a main chain on which side chains are attached at the branching sites, and at least 75% of the side chains having 2 to 4 C atoms.

5. Pressure sensitive adhesive according to any of the preceding claims, the tackifying resin having an average molecular weight of less than 4000 g/mol (determined by means of gel permeation chromatography).

6. Pressure sensitive adhesive according to any of the preceding claims, the tackifying resin being selected from a group which encompasses pinene resins, indene resins, and rosins, and also their disproportionate, hydrogenated, polymerized or esterified derivatives and salts; aliphatic hydrocarbon resins; alkylaromatic hydrocarbon resins; aromatic hydrocarbon resins; terpene resins; terpene-phenolic resins; C5 and C9 hydrocarbon resins, which may be at least partly hydrogenated; natural resins; and combinations thereof.

7. Pressure sensitive adhesive according to any of the preceding claims, the tackifying resin having a DACP (measurement method analogous to ASTM D6038) of greater than 0°C.

8. Pressure sensitive adhesive according to any of Claims 1 to 6, the tackifying resin having a DACP (measurement method analogous to ASTM D6038) of less than -20°C.

9. Pressure sensitive adhesive according to any of the preceding claims, $R^6$ in the monomers D being selected from a group which encompasses methyl, ethyl, propyl, pentyl, hexyl, heptyl, octyl, nonyl, decyl, undecyl, lauryl, and the branched isomers thereof; cycloalkyl groups and polycyclic alkyl groups, it being possible for the cycloalkyl groups and polycyclic alkyl groups to be substituted by alkyl groups, halogen atoms or cyano groups; and combinations thereof.

10. Pressure sensitive adhesive according to any of the preceding claims, the monomer mixture comprising a proportion of at least 80 wt% of monomers A or of at least 80 wt% of the monomers A and D together.

**11.** Pressure sensitive adhesive according to Claim 10, the tackifying resin being present in a proportion of at least 40 parts by weight per 100 parts by weight of polyacrylate.

**12.** Pressure sensitive adhesive according to any of the preceding claims, the monomer mixture comprising a proportion of monomers A of up to 40 wt%, more particularly 5 to 15 wt%.

**13.** Pressure sensitive adhesive according to any of the preceding claims, the monomer mixture comprising a proportion of 0.01 to 10 wt% of monomers B and/or of 0.01 to 20 wt% of monomers C.

**14.** Method for producing a pressure sensitive adhesive, comprising the steps of:

(A) generating a monomer mixture, the monomer mixture comprising

a) 5 to 100 wt% of acrylic esters of the formula $CR^3_2 = C(R^2)\ (COOR^1)$ as monomers A, where $R^1$ is a branched alkyl group having 16 to 22 C atoms which has at least two branching sites, $R^2$ is selected from H, methyl or halogen, and $R^3$ independently at each occurrence is selected from H or halogen,
b) 0 to 20 wt% of acrylic acid of the formula $CR^5_2 = C\ (R^4)\ (COOH)$ as monomers B, where $R^4$ is selected from H, methyl or halogen, and $R^5$ independently at each occurrence is selected from H or halogen,
c) 0 to 30 wt% of olefinically unsaturated monomers having at least one functional group as monomers C, where the monomers C do not fall within the monomers A, B, and D, and
d) 0 to 95 wt% of acrylic esters of the formula $CR^8_2 = C(R^7)\ (COOR^6)$ as monomers D, where $R^6$ is a linear, singly branched, cyclic or polycyclic alkyl group having 1 to 14 C atoms, $R^7$ is selected from H, methyl or halogen, and $R^8$ independently at each occurrence is selected from H or halogen;

(B) polymerizing the monomer mixture to form polyacrylate;
(C) mixing the polyacrylate with at least one tackifying resin, which is used in a proportion of 20 to 60 parts by weight per 100 parts by weight of polyacrylate; and
(D) at least partly crosslinking a mixture obtained according to step (C), to form the pressure sensitive adhesive.

**15.** Method according to Claim 14, step (B) being carried out in a solvent.

**16.** Method according to Claim 15, the solvent in a further step (E) being removed by heating.

**17.** Method according to Claim 14, the polyacrylate for step (C) being liquefied by heating.

**18.** Method according to any of Claims 14 to 17, the crosslinking in step (D) taking place by irradiation with UV radiation, by irradiation with an ionizing radiation, thermally, or through a combination thereof.

**19.** Method according to any of Claims 14 to 18 for producing an adhesive tape, the adhesive tape comprising a pressure sensitive adhesive according to any of claims 1 to 13 and a carrier, and the carrier being provided with the pressure sensitive adhesive.

**20.** Method according to Claim 19, the carrier being provided with the pressure sensitive adhesive by the mixture obtained according to step (C) being applied to the carrier and subsequently crosslinked in step (D).

**21.** Adhesive tape which includes a carrier and at least one adhesive layer which comprises a pressure sensitive adhesive according to any of Claims 1 to 13.

**22.** Use of a pressure sensitive adhesive of any according to Claims 1 to 13 for bonding substrates having a surface energy of less than 40 $dyn/cm^2$.

**23.** Use of an acrylic ester of the formula $CR^3_2 = C(R^2)\ (COOR^1)$ for producing a pressure sensitive adhesive, where $R^1$ is a branched alkyl group having 16 to 22 C atoms and including at least two branching sites, $R^2$ is selected from H, methyl or halogen, and $R^3$ independently at each occurrence is selected from H or halogen.

## Revendications

1. Masse adhésive sensible à la pression, comprenant :

   - un polyacrylate au moins partiellement réticulé à base d'un mélange de monomères, le mélange de monomères comprenant :

     a) 5 à 100 % en poids d'esters de l'acide acrylique de formule $CR^3{}_2{=}C(R^2)$ (COOR$^1$) en tant que monomères A, $R^1$ étant un groupe alkyle ramifié de 16 à 22 atomes C, qui comprend au moins deux emplacements de ramification, $R^2$ étant choisi parmi H, méthyle ou halogène, et les $R^3$ étant chacun choisis indépendamment l'un de l'autre parmi H ou halogène,
     b) 0 à 20 % en poids d'acide acrylique de formule $CR^5{}_2{=}C$ ($R^4$) (COOH) en tant que monomères B, $R^4$ étant choisi parmi H, méthyle ou halogène, et les $R^5$ étant chacun choisis indépendamment l'un de l'autre parmi H ou halogène,
     c) 0 à 30 % en poids de monomères oléfiniquement insaturés contenant au moins un groupe fonctionnel en tant que monomères C, les monomères C ne faisant pas partie des monomères A, B et D, et
     d) 0 à 95 % en poids d'esters de l'acide acrylique de formule $CR^8{}_2{=}C$ ($R^7$) (COOR$^6$) en tant que monomères D, $R^6$ étant un groupe alkyle linéaire, ramifié une fois, cyclique ou polycyclique, de 1 à 14 atomes C, $R^7$ étant choisi parmi H, méthyle ou halogène, et les $R^8$ étant chacun choisis indépendamment l'un de l'autre parmi H ou halogène ;

   - au moins une résine collante, qui est présente en une proportion de 20 à 60 parties en poids, par rapport à 100 parties en poids de polyacrylate.

2. Masse adhésive sensible à la pression selon la revendication 1, dans laquelle au moins la moitié des monomères A comprennent un groupe alkyle $R^1$ contenant trois emplacements de ramification ou plus.

3. Masse adhésive sensible à la pression selon l'une quelconque des revendications précédentes, dans laquelle, dans les monomères A, $R^2$ est choisi parmi H ou méthyle, et $R^3$ = H.

4. Masse adhésive sensible à la pression selon l'une quelconque des revendications précédentes, dans laquelle les groupes alkyle $R^1$ des monomères A comprennent une chaîne principale, à laquelle des chaînes latérales sont reliées aux emplacements de ramification, et au moins 75 % des chaînes latérales comprennent 2 à 4 atomes C.

5. Masse adhésive sensible à la pression selon l'une quelconque des revendications précédentes, dans laquelle la résine collante présente un poids moléculaire moyen inférieur à 4 000 g/mol (déterminé par chromatographie par perméation de gel).

6. Masse adhésive sensible à la pression selon l'une quelconque des revendications précédentes, dans laquelle la résine collant est choisie dans un groupe qui comprend les résines de pinène, d'indène et de colophane, ainsi que leurs dérivés dismutés, hydrogénés, polymérisés ou estérifiés et leurs sels, les résines hydrocarbonées aliphatiques, les résines hydrocarbonées alkylaromatiques, les résines hydrocarbonées aromatiques, les résines de terpène, les résines de terpène-phénol, les résines hydrocarbonées en C5 et C9, qui peuvent être au moins partiellement hydrogénées, les résines naturelles et leurs combinaisons.

7. Masse adhésive sensible à la pression selon l'une quelconque des revendications précédentes, dans laquelle la résine collante présente une valeur DACP (méthode de mesure analogue à ASTM D6038) supérieure à 0 °C.

8. Masse adhésive sensible à la pression selon l'une quelconque des revendications 1 à 6, dans laquelle la résine collante présente une valeur DACP (méthode de mesure analogue à ASTM D6038) inférieure à -20 °C.

9. Masse adhésive sensible à la pression selon l'une quelconque des revendications précédentes, dans laquelle, dans les monomères D, $R^6$ est choisi dans un groupe qui comprend méthyle, éthyle, propyle, pentyle, hexyle, heptyle, octyle, nonyle, décyle, undécyle, lauryle, ainsi que leurs isomères ramifiés, les groupes cycloalkyle et les groupes alkyle polycycliques, les groupes cycloalkyle et les groupes alkyle polycycliques pouvant être substitués avec des groupes alkyle, des atomes d'halogène ou des groupes cyano, et leurs combinaisons.

10. Masse adhésive sensible à la pression selon l'une quelconque des revendications précédentes, dans laquelle le

mélange de monomères comprend une proportion d'au moins 80 % en poids de monomères A ou d'au moins 80 % en poids des monomères A et D ensemble.

**11.** Masse adhésive sensible à la pression selon la revendication 10, dans laquelle la résine collante est présente en une proportion d'au moins 40 parties en poids, par rapport à 100 parties en poids de polyacrylate.

**12.** Masse adhésive sensible à la pression selon l'une quelconque des revendications précédentes, dans laquelle le mélange de monomères contient une proportion de monomères A de jusqu'à 40 % en poids, notamment de 5 à 15 % en poids.

**13.** Masse adhésive sensible à la pression selon l'une quelconque des revendications précédentes, dans laquelle le mélange de monomères comprend une proportion de 0,01 à 10 % en poids de monomères B et/ou de 0,01 à 20 % en poids de monomères C.

**14.** Procédé de fabrication d'une masse adhésive sensible à la pression, comprenant les étapes suivantes :

(A) la formation d'un mélange de monomères, le mélange de monomères comprenant :

a) 5 à 100 % en poids d'esters de l'acide acrylique de formule $CR^3_2=C(R^2)$ $(COOR^1)$ en tant que monomères A, $R^1$ étant un groupe alkyle ramifié de 16 à 22 atomes C, qui comprend au moins deux emplacements de ramification, $R^2$ étant choisi parmi H, méthyle ou halogène, et les $R^3$ étant chacun choisis indépendamment l'un de l'autre parmi H ou halogène,
b) 0 à 20 % en poids d'acide acrylique de formule $CR^5_2=C$ $(R^4)$ (COOH) en tant que monomères B, $R^4$ étant choisi parmi H, méthyle ou halogène, et les $R^5$ étant chacun choisis indépendamment l'un de l'autre parmi H ou halogène,
c) 0 à 30 % en poids de monomères oléfiniquement insaturés contenant au moins un groupe fonctionnel en tant que monomères C, les monomères C ne faisant pas partie des monomères A, B et D, et
d) 0 à 95 % en poids d'esters de l'acide acrylique de formule $CR^8_2=C$ $(R^7)$ $(COOR^6)$ en tant que monomères D, $R^6$ étant un groupe alkyle linéaire, ramifié une fois, cyclique ou polycyclique, de 1 à 14 atomes C, $R^7$ étant choisi parmi H, méthyle ou halogène, et les $R^8$ étant chacun choisis indépendamment l'un de l'autre parmi H ou halogène,

(B) la polymérisation du mélange de monomères avec formation d'un polyacrylate ;
(C) le mélange du polyacrylate avec au moins une résine collante, qui est présente en une proportion de 20 à 60 parties en poids, par rapport à 100 parties en poids de polyacrylate ; et
(D) la réticulation au moins partielle d'un mélange obtenu après l'étape (C) avec formation de la masse adhésive sensible à la pression.

**15.** Procédé selon la revendication 14, dans lequel l'étape (B) est réalisée dans un solvant.

**16.** Procédé selon la revendication 15, dans lequel le solvant est éliminé par chauffage lors d'une étape (E) supplémentaire.

**17.** Procédé selon la revendication 14, dans lequel le polyacrylate est liquéfié par chauffage pour l'étape (C) .

**18.** Procédé selon l'une quelconque des revendications 14 à 17, dans lequel, à l'étape (D), la réticulation a lieu par exposition à un rayonnement UV, par exposition à un rayonnement ionisant, thermiquement ou par une combinaison de ces mesures.

**19.** Procédé selon l'une quelconque des revendications 14 à 18 pour la fabrication d'une bande adhésive, la bande adhésive comprenant une masse adhésive sensible à la pression selon l'une quelconque des revendications 1 à 13 et un support, et le support étant muni de la masse adhésive sensible à la pression.

**20.** Procédé selon la revendication 19, dans lequel le support est muni de la masse adhésive sensible à la pression par application du mélange obtenu après l'étape (C) sur le support, puis réticulation à l'étape (D) .

**21.** Bande adhésive, qui comprend un support et au moins une couche adhésive, qui comprend une masse adhésive sensible à la pression selon l'une quelconque des revendications 1 à 13.

**22.** Utilisation d'une masse adhésive sensible à la pression selon l'une quelconque des revendications 1 à 13 pour le collage de substrats ayant une énergie de surface inférieure à 40 dyn/$cm^2$.

**23.** Utilisation d'un ester de l'acide acrylique de formule $CR^3_2=C(R^2)$ $(COOR^1)$ pour la fabrication d'une masse adhésive sensible à la pression, $R^1$ étant un groupe alkyle ramifié de 16 à 22 atomes C, qui comprend au moins deux emplacements de ramification, $R^2$ étant choisi parmi H, méthyle ou halogène, et les $R^3$ étant chacun choisis indépendamment l'un de l'autre parmi H ou halogène.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5602221 A, Bennett
- EP 1318181 A1
- WO 2009124979 A
- WO 201164190 A
- WO 9801478 A1

### In der Beschreibung aufgeführte Nicht-Patentliteratur

- **DONATAS SATAS.** Handbook of Pressure Sensitive Adhesive Technology. 1989
- **FOUASSIER.** Photoinititation, Photopolymerization and Photocuring: Fundamentals and Applications. Hanser-Verlag, 1995
- Chemistry and Technology of UV and EB Formulation for Coatings. **CARROY et al.** Inks and Paints. SITA, 1994
- **T.G. FOX.** *Bull. Am. Phys. Soc.,* 1956, vol. 1, 123
- **HOUBEN WEYL.** *Methoden der Organischen Chemie,* vol. E 19a, 60-147
- *Macromolecules,* 1995, vol. 28, 7886
- Photoinititation, Photopolymerization and Photocuring: Fundamentals and Applications. Hanser-Verlag, 1995